# EUROPÄISCHE PATENTSCHRIFT

(11) **EP 4 459 354 B1**
(45) Veröffentlichungstag und Bekanntmachung des Hinweises auf die Patenterteilung: **28.10.2026**
(21) Anmeldenummer: 24173278.3
(22) Anmeldetag: 30.04.2024
(51) Int. Cl.: G02B 13/00

(54) **OPTISCHES SYSTEM FÜR EINE KAMERA UND KAMERA MIT EINEM OPTISCHEN SYSTEM**
OPTICAL SYSTEM FOR A CAMERA AND CAMERA COMPRISING AN OPTICAL SYSTEM
SYSTÈME OPTIQUE POUR CAMÉRA ET CAMÉRA COMPRENANT UN SYSTÈME OPTIQUE

(30) Priorität: 05.05.2023 DE 102023111846
(43) Veröffentlichungstag der Anmeldung: 06.11.2024
(73) Patentinhaber: Carl Zeiss AG, 73447 Oberkochen (DE)
(72) Erfinder: Liu, Chang, 73447 Oberkochen (DE); Zellner, Johannes, 73447 Oberkochen (DE)
(74) Vertreter: Freischem & Partner Patentanwälte mbB

(56) Entgegenhaltungen:
- CN-A- 115 343 687
- US-A1- 2012 013 787

## Beschreibung

Die Erfindung betrifft ein optisches System für eine Kamera und eine Kamera mit einem optischen System. Die Kamera ist insbesondere an einem tragbaren Telefon, an einem tragbaren Computer, an einem Fahrzeug, in einem Flugkörper (beispielsweise eine Drohne oder ein Satellit), an einem bemannten Flugzeug oder an einem unbemannten Flugzeug angeordnet.

Ein bekanntes optisches System in Form eines Kameramoduls, das an einer tragbaren Vorrichtung (beispielsweise eine digitale Kamera, ein Handheld-Computer etc.) angeordnet ist, weist ein Objektiv auf, das mittels einer Linse oder mehrerer Linsen Bilder eines Objekts auf eine Sensoreinheit (auch Bilderfassungseinheit genannt) abbildet. Beispielsweise ist die Sensoreinheit als ein CCD oder ein CMOS ausgebildet. Ein derartiges Kameramodul ist insbesondere auch in einem tragbaren Telefon (Handy) angeordnet. Das Kameramodul sollte bzw. dessen Linsen sollten zahlreiche Bedingungen erfüllen. Beispielsweise ist es besonders wünschenswert, dass das Kameramodul einen geringen Bauraum benötigt und dementsprechend klein ausgebildet sein sollte. Ferner soll die Anzahl der für das Objektiv verwendeten Linsen möglichst gering sein. Da es sich hierbei auch um Massenartikel handelt, ist es auch wünschenswert, dass das Kameramodul preiswert hergestellt werden kann. Insofern sollte ein Kameramodul mit wenigen Elementen gebildet werden können, wobei die wenigen Elemente zudem noch preiswert sein sollten. Auch sollte das Kameramodul ein gutes Auflösungsvermögen aufweisen.

Diese Patentanmeldung beschäftigt sich mit dem Auflösungsvermögen eines optischen Systems beispielsweise in Form des vorgenannten Kameramoduls. Die theoretische Auflösungsgrenze eines vorgenannten optischen Systems ist durch den sogenannten Airy-Durchmesser gegeben, der sich wie folgt berechnet: $d = \frac{1 , 22 ⋅ λ}{n ⋅ sin θ}$ [1] wobei
- d: der Airy-Durchmesser ist,
- λ: die Wellenlänge des in das optische System einfallenden Lichts ist,
- n: der Brechungsindex an einer Ebene des durch das optische System erzeugten Bildes des Objekts ist, wobei die Ebene eine Detektionsfläche einer Sensoreinheit des optischen Systems ist, und
- θ: der halbe Einfallswinkel von Randstrahlen des auf die Sensoreinheit des optischen Systems einfallenden Lichtbündels ist.

Die Größe $n ⋅ sin θ$ ergibt die numerische Apertur NA des optischen Systems. Die numerische Apertur NA ergibt sich aus der sogenannten F-Zahl (abgekürzt "f/#") des optischen Systems: $n ⋅ sin θ = \frac{1}{2 f / #}$ [2]

Wenn man nun die Gleichung [2] in der Gleichung [1] berücksichtigt, so erhält man $d = 2 , 44 ⋅ λ ⋅ f / #$ [3]

Die Auflösungsgrenze d ist demnach umso kleiner, je kleiner die Wellenlänge und/oder die F-Zahl ist.

Aus dem Stand der Technik sind Sensoreinheiten bekannt, die eine Vielzahl von Pixeln aufweisen. Jedes Pixel der Vielzahl von Pixeln dient der Detektion von auf das Pixel einfallendem Licht. Im Grunde genommen ist an jedem Pixel jeweils eine Detektionseinheit angeordnet. Die Detektionseinheit detektiert auf das Pixel einfallendes Licht und erzeugt in Abhängigkeit des einfallenden Lichts ein Detektionssignal, das beispielsweise an eine Prozessoreinheit geleitet wird. Die Prozessoreinheit wertet die an sie geleiteten Detektionssignale aus und zeigt die Auswertung beispielsweise in Form eines Bildes auf einer Anzeigeeinheit an. Zueinander direkt benachbarte Pixel der Vielzahl von Pixeln weisen beispielsweise bei Sensoren für den sichtbaren Wellenlängenbereich einen Abstand zueinander von 1 µm oder 0,8 µm oder bei Sensoren für langwelliges Infrarot-Licht einen Abstand von ca. 12 µm oder 17 µm auf, wobei dieser Abstand von der Mitte eines ersten Pixels zu der Mitte eines zweiten Pixels gemessen wird, wobei das erste Pixel und das zweite Pixel direkt zueinander benachbart sind. Um Detektionssignale zweier benachbarter Pixel einer Sensoreinheit in einem Bild eines Objekts, das durch das oben beschriebene optische System abgebildet wird, gut auflösen zu können, sollte die Auflösungsgrenze des optischen Systems dem vorgenannten Abstand entsprechen oder im Wesentlichen entsprechen. Um eine Auflösungsgrenze von wenigen µm, insbesondere kleiner als 1 µm zu erzielen, ist es daher wünschenswert, das optische System derart auszubilden, dass dessen F-Zahl klein ist, um so eine kleine Auflösungsgrenze d zu erzielen.

Aus dem Stand der Technik ist eine Wärmebildkamera bekannt, die ein optisches System mit einem Objektiv und mit einer elektronischen Sensoreinheit aufweist. Das Objektiv bildet ein Objekt auf die elektronische Sensoreinheit ab. Die elektronische Sensoreinheit detektiert Infrarotlicht, beispielsweise aus einem Wellenlängenbereich von ungefähr 1 µm bis 15 µm. Gemäß dem sogenannten Rayleigh-Kriterium lässt sich unter Annahme, dass es sich um ein aberrationsfreies optisches System handelt, die optische Auflösung R des optischen Systems der Wärmebildkamera wie folgt bestimmen: $R = 0 , 61 ⋅ \frac{λ}{NA}$ [4] wobei
- R: die optische Auflösung des optischen Systems der Wärmebildkamera ist,
- λ: die Wellenlänge des in das optische System einfallenden Lichts ist, und
- NA: die numerische Apertur des optischen Systems der Wärmebildkamera ist.

Wie oben bereits erwähnt, entspricht die numerische Apertur NA der Größe $n ⋅ sin θ$ wobei
- n: der Brechungsindex an einer Ebene des durch das optische System der Wärmebildkamera erzeugten Bildes des Objekts ist, wobei die Ebene eine Detektionsfläche der elektronischen Sensoreinheit des optischen Systems ist, und
- θ: der halbe Einfallswinkel von Randstrahlen des auf die elektronische Sensoreinheit der Wärmebildkamera einfallenden Lichtbündels ist.

Die optische Auflösung R des optischen Systems der Wärmebildkamera lässt sich daher auch wie folgt bestimmen: $R = 0 , 61 ⋅ \frac{λ}{n ⋅ sin θ}$ [5]

Die optische Auflösung R des optischen Systems der Wärmebildkamera wird demnach größer, je größer die numerische Apertur NA ist.

Aus dem Stand der Technik ist bei der Lichtmikroskopie das Verfahren der Immersion bekannt, bei dem zwischen einem Objektiv und einem zu beobachtenden Objekt eine Immersionsflüssigkeit eingebracht wird. Mit anderen Worten ausgedrückt, wird das zu beobachtende Objekt in die Immersionsflüssigkeit eingebettet. Es ist bekannt, dass die erzielbare Auflösung eines Bildes des Objekts aufgrund des Einsatzes der Immersionsflüssigkeit bei der Lichtmikroskopie vergrößert werden kann.

Hinsichtlich des Standes der Technik wird auf die US 3,397,314 A, US 2005/0254121 A1, US 4,636,631 A, US 5,623,143 A, US 4,425,504 A, CN 111025529 A sowie die CN 109061860 A verwiesen. Ferner wird auf die US 2012/0013787 A1 sowie die CN 115 343 687 A verwiesen. Dabei betrifft CN 115 343 687 eine Laserdetektionsvorrichtung sowie ein zugehöriges Laserradarsystem. Die Vorrichtung umfasst eine Festkörper-Immersionslinse, die zwischen einem Empfangsobjektiv und einem Laserdetektor angeordnet ist, wobei die ebene Fläche der Linse nahe der lichtempfindlichen Oberfläche des Detektors positioniert ist. Durch die Nutzung der spezifischen Brechungseigenschaften und der Dicke der Festkörper-Immersionslinse komprimiert die Vorrichtung die Bildebene effektiv und steigert die optische Verstärkung, ohne dabei geometrische Aberrationen wie sphärische Aberration oder Koma einzuführen.

Der Erfindung liegt die Aufgabe zugrunde, ein optisches System anzugeben, das eine relativ geringe F-Zahl aufweist, um eine kleine Auflösungsgrenze zu erzielen. Ferner liegt der Erfindung die Aufgabe zugrunde, ein optisches System anzugeben, das eine relativ große numerische Apertur NA aufweist, um eine gute optische Auflösung des optischen Systems zu erzielen. Darüber hinaus liegt der Erfindung die Aufgabe zugrunde, eine Kamera mit einem derartigen optischen System anzugeben.

Diese Aufgabe wird erfindungsgemäß mit einem optischen System mit den Merkmalen des Anspruchs 1 gelöst. Eine Kamera zur Abbildung eines Objekts mit einem optischen System ist durch die Merkmale des Anspruchs 9 gegeben. Weitere Merkmale der Erfindung ergeben sich aus der nachfolgenden Beschreibung, den beigefügten Ansprüchen sowie den beigefügten Zeichnungen.

Das erfindungsgemäße optische System ist für eine Kamera zur Abbildung eines Objekts vorgesehen. Beispielsweise ist/sind das erfindungsgemäße optische System und/oder die Kamera, an welcher das erfindungsgemäße optische System angeordnet ist, an einem tragbaren Telefon, an einem tragbaren Computer, an einem Fahrzeug, in einem Flugkörper (beispielsweise eine Drohne oder ein Satellit), an einem bemannten Flugzeug oder an einem unbemannten Flugzeug angeordnet. Es wird explizit darauf hingewiesen, dass das erfindungsgemäße optische System nicht auf die vorgenannten Ausführungsformen eingeschränkt ist. Vielmehr kann das optische System an jeglichem optischen Gerät angeordnet sein, für welches das optische System geeignet ist. Beispielsweise kann das optische System in einem Fernglas, in einem Fernrohr, in einem Teleskop, in einem Spektiv oder in einem Lichtmikroskop angeordnet sein.

Das erfindungsgemäße optische System weist mindestens eine Sensoreinheit auf. Beispielsweise ist die Sensoreinheit als ein gekühlter Sensor, als ein ungekühlter Sensor, als ein CCD-Sensor, als ein CMOS-Sensor, als ein InGaAs-Sensor, als ein InSb-Sensor, als ein MCT-Sensor (also ein Quecksilber-Cadmium-Tellurid-Sensor), als ein QWIP-Sensor (also ein Quantentopf-Infrarot-Photodetektor) und/oder als ein Mikrobolometer ausgebildet. Die Erfindung ist nicht auf die vorgenannten Ausführungsformen der Sensoreinheit eingeschränkt. Vielmehr kann als Sensoreinheit jede Sensoreinheit verwendet werden, welche für die Erfindung geeignet ist. Die Sensoreinheit kann auch als elektronische Sensoreinheit bezeichnet werden. Beispielsweise weist die Sensoreinheit eine Vielzahl von Pixeln auf. Jedes Pixel der Vielzahl von Pixeln dient der Detektion von auf das Pixel einfallendem Licht. Im Grunde genommen ist an jedem Pixel jeweils eine Detektionseinheit angeordnet. Die Detektionseinheit detektiert auf das Pixel einfallendes Licht und erzeugt in Abhängigkeit des einfallenden Lichts ein Detektionssignal, das beispielsweise an eine Prozessoreinheit geleitet wird. Die Prozessoreinheit wertet die an sie geleiteten Detektionssignale aus und zeigt die Auswertung beispielsweise in Form eines Bildes auf einer Anzeigeeinheit an. Zusätzlich oder alternativ hierzu ist es vorgesehen, das Detektionssignal und/oder das Bild in einer Speichereinheit zu speichern. Wiederum zusätzlich oder alternativ hierzu ist es vorgesehen, dass das Detektionssignal und/oder das Bild an eine weitere Einheit, beispielsweise an ein weiteres Computersystem, weitergeleitet wird.

Darüber hinaus weist das erfindungsgemäße optische System mindestens eine erste Linseneinheit und mindestens eine zweite Linseneinheit auf. Beispielsweise ist die erste Linseneinheit mit einer einzigen Linse versehen. Weitere Ausführungsformen des erfindungsgemäßen optischen Systems sehen vor, dass die erste Linseneinheit mehrere Linsen und/oder mehrere optische Elemente (beispielsweise in Form eines Prismas oder eines Spiegels) aufweist. Bei einer weiteren Ausführungsform des erfindungsgemäßen optischen Systems ist die erste Linseneinheit als eine Linsengruppe ausgebildet, die mehrere Linsen und/oder mehrere optische Elemente aufweist. Ferner ist es beispielsweise vorgesehen, dass die zweite Linseneinheit mit einer einzigen Linse versehen ist. Weitere Ausführungsformen des erfindungsgemäßen optischen Systems sehen vor, dass die zweite Linseneinheit mehrere Linsen und/oder mehrere optische Elemente (beispielsweise in Form eines Prismas oder eines Spiegels) aufweist. Bei einer weiteren Ausführungsform des erfindungsgemäßen optischen Systems ist die zweite Linseneinheit als eine Linsengruppe ausgebildet, die mehrere Linsen und/oder mehrere optische Elemente aufweist. Alternativ ist es bei einer noch weiteren Ausführungsform des erfindungsgemäßen optischen Systems vorgesehen, dass das erfindungsgemäße optische System mindestens eine erste Linsengruppe und mindestens eine zweite Linsengruppe aufweist, wobei jede der Linsengruppen mehrere Linsen und/oder mehrere optische Elemente aufweist.

Das erfindungsgemäße optische System ist mit mindestens einer Immersionseinheit versehen, die beispielsweise einen Brechungsindex (also eine Brechzahl) n größer 1 aufweist. Insbesondere gilt für den Brechungsindex n das Folgende: 1 < n ≤ 6 oder 1 < n ≤ 4. Beispielsweise ist der Brechungsindex der Immersionseinheit größer als ein Brechungsindex eines an der Immersionseinheit objektseitig angrenzenden Mediums. Beispielsweise ist das Medium Luft oder die zweite Linseneinheit. Bei einer weiteren Ausführungsform des erfindungsgemäßen Systems ist der Brechungsindex der Immersionseinheit sehr ähnlich zu oder identisch mit dem Brechungsindex eines an der Immersionseinheit objektseitig angrenzenden Mediums. Beispielsweise unterscheiden sich der Brechungsindex der Immersionseinheit und der Brechungsindex des an der Immersionseinheit objektseitig angrenzenden Mediums um ± 0,01 oder ± 0,02.

Das erfindungsgemäße optische System weist eine Lichteinfallsrichtung auf. Die Lichteinfallsrichtung ist die Richtung, in welche Licht vom Objekt gesehen in das erfindungsgemäße optische System eintritt und in welcher das Licht das erfindungsgemäße optische System durchläuft, bis es von der Sensoreinheit detektiert wird. Vom Objekt aus in die Lichteinfallsrichtung gesehen sind zunächst die erste Linseneinheit, dann die zweite Linseneinheit, dann die Immersionseinheit und dann die Sensoreinheit entlang einer optischen Achse des erfindungsgemäßen optischen Systems angeordnet.

Die Immersionseinheit ist zwischen der zweiten Linseneinheit und der Sensoreinheit angeordnet. Ferner ist die Immersionseinheit sowohl an der zweiten Linseneinheit als auch an der Sensoreinheit angeordnet. Im Unterschied zum Stand der Technik ist die Immersionseinheit nicht an dem Objekt angeordnet, sondern an der Sensoreinheit, auf welche das Objekt mittels der zweiten Linseneinheit abgebildet wird. Beispielsweise ist die Immersionseinheit als Linseneinrichtung ausgebildet. Insbesondere ist es vorgesehen, dass die Linseneinrichtung eine erste Seite und eine zweite Seite aufweist. Die erste Seite der Linseneinrichtung ist zur zweiten Linseneinheit gerichtet und ist beispielsweise gekrümmt ausgebildet. Die zweite Seite der Linseneinrichtung ist zur Sensoreinheit gerichtet und ist beispielsweise plan ausgebildet. Bei einer weiteren Ausführungsform des erfindungsgemäßen optischen Systems ist es zusätzlich oder alternativ vorgesehen, dass die Linseneinrichtung mit einer einzigen Linse versehen ist. Weitere Ausführungsformen des erfindungsgemäßen optischen Systems sehen vor, dass die Linseneinrichtung mehrere Linsen und/oder mehrere optische Elemente (beispielsweise in Form eines Prismas oder eines Spiegels) aufweist. Bei einer weiteren Ausführungsform des erfindungsgemäßen optischen Systems ist die Linseneinrichtung als eine Linsengruppe ausgebildet, die mehrere Linsen und/oder mehrere optische Elemente aufweist.

Ferner ist es vorgesehen, dass die zweite Linseneinheit und die Immersionseinheit zusammen positive Brechkraft aufweisen. Insofern verhalten sich die zweite Linseneinheit und die Immersionseinheit wie eine Sammellinse. Die erste Linseneinheit, die zweite Linseneinheit und die Immersionseinheit dienen der Abbildung des Objekts auf die Sensoreinheit.

Das erfindungsgemäße optische System stellt sicher, dass aufgrund der Anordnung der Immersionseinheit an der Sensoreinheit eine größere numerische Apertur NA des erfindungsgemäßen optischen Systems erzielbar ist. Eine größere numerische Apertur NA des erfindungsgemäßen optischen Systems im Unterschied zum Stand der Technik führt zu einer kleineren F-Zahl des erfindungsgemäßen optischen Systems im Vergleich zum Stand der Technik. Demnach ist es möglich, im Vergleich zum Stand der Technik eine kleinere Auflösungsgrenze zu erzielen (siehe Gleichung [3]). Aufgrund der größeren numerischen Apertur des erfindungsgemäßen optischen Systems im Vergleich zum Stand der Technik ist demnach auch eine höhere Auflösung des erfindungsgemäßen optischen Systems im Vergleich zum Stand der Technik erzielbar (siehe Gleichung [5]). Ferner stellt das erfindungsgemäße optische System sicher, dass die numerische Apertur im Bereich der Sensoreinheit größer ist als die numerische Apertur im objektseitigen Bereich der Immersionseinheit.

Bei dem erfindungsgemäßen optischen System ist es vorgesehen, dass die Immersionseinheit die Sensoreinheit berührt. Mit anderen Worten ausgedrückt, ist die Immersionseinheit direkt an der Sensoreinheit angeordnet. Insbesondere ist es vorgesehen, dass eine zur Sensoreinheit gerichtete Fläche der Immersionseinheit eine zur Immersionseinheit gerichtete Detektionsfläche der Sensoreinheit berührt.

Beispielsweise ist es vorgesehen, dass die Immersionseinheit die Sensoreinheit teilweise berührt. Mit anderen Worten ausgedrückt, ist es bei dieser Ausführungsform des erfindungsgemäßen optischen Systems vorgesehen, dass nur ein erster Teil der zur Sensoreinheit gerichteten Fläche der Immersionseinheit an der zur Immersionseinheit gerichteten Detektionsfläche der Sensoreinheit direkt angeordnet ist. Ein zweiter Teil der zur Sensoreinheit gerichteten Fläche der Immersionseinheit ist nicht direkt an der zur Immersionseinheit gerichteten Detektionsfläche der Sensoreinheit angeordnet. Der zweite Teil der zur Sensoreinheit gerichteten Fläche der Immersionseinheit ist demnach zur Sensoreinheit beabstandet angeordnet. Alternativ hierzu ist es vorgesehen, dass die Immersionseinheit die Sensoreinheit vollständig berührt. Mit anderen Worten ausgedrückt, ist es bei dieser Ausführungsform des erfindungsgemäßen optischen Systems vorgesehen, dass die zur Sensoreinheit gerichtete Fläche der Immersionseinheit vollständig an der zur Immersionseinheit gerichteten Detektionsfläche der Sensoreinheit angeordnet ist.

Bei dem erfindungsgemäßen optischen System ist es vorgesehen, dass die Immersionseinheit die zweite Linseneinheit berührt. Mit anderen Worten ausgedrückt, ist die Immersionseinheit direkt an der zweiten Linseneinheit angeordnet. Insbesondere ist es vorgesehen, dass eine zur zweiten Linseneinheit gerichtete Fläche der Immersionseinheit eine zur Immersionseinheit gerichtete Fläche der zweiten Linseneinheit berührt. Beispielsweise ist es vorgesehen, dass die Immersionseinheit die zweite Linseneinheit teilweise berührt. Mit anderen Worten ausgedrückt, ist es bei dieser Ausführungsform des erfindungsgemäßen optischen Systems vorgesehen, dass nur ein erster Teil der zur zweiten Linseneinheit gerichteten Fläche der Immersionseinheit an der zur Immersionseinheit gerichteten Fläche der zweiten Linseneinheit direkt angeordnet ist. Ein zweiter Teil der zur zweiten Linseneinheit gerichteten Fläche der Immersionseinheit ist nicht direkt an der zur Immersionseinheit gerichteten Fläche der zweiten Linseneinheit angeordnet. Der zweite Teil der zur zweiten Linseneinheit gerichteten Fläche der Immersionseinheit ist demnach zur zweiten Linseneinheit beabstandet angeordnet. Alternativ hierzu ist es vorgesehen, dass die Immersionseinheit die zweite Linseneinheit vollständig berührt. Mit anderen Worten ausgedrückt, ist es bei dieser Ausführungsform des erfindungsgemäßen optischen Systems vorgesehen, dass die zur zweiten Linseneinheit gerichtete Fläche der Immersionseinheit vollständig an der zur Immersionseinheit gerichteten Fläche der zweiten Linseneinheit angeordnet ist.

Bei einer wiederum weiteren Ausführungsform des erfindungsgemäßen optischen Systems ist es zusätzlich oder alternativ vorgesehen, dass die Immersionseinheit und die Sensoreinheit beabstandet zueinander angeordnet sind. Insbesondere ist es vorgesehen, dass die Immersionseinheit zu der Sensoreinheit einen Abstand aufweist, der nachfolgend als Immersionseinheit-Abstand bezeichnet wird. Beispielsweise ist der Immersionseinheit-Abstand die Länge einer geraden Strecke zwischen einem ersten Punkt auf einer zur Sensoreinheit gerichteten Oberfläche der Immersionseinheit und einem zweiten Punkt auf einer zur Immersionseinheit gerichteten Oberfläche der Sensoreinheit. Insbesondere ist der Immersionseinheit-Abstand die kürzeste Länge aller möglichen geraden Strecken zwischen einem beliebigen ersten Punkt auf einer zur Sensoreinheit gerichteten Oberfläche der Immersionseinheit und einem beliebigen zweiten Punkt auf einer zur Immersionseinheit gerichteten Oberfläche der Sensoreinheit. Bei der Ausführungsform des erfindungsgemäßen optischen Systems ist es vorgesehen, dass für den Immersionseinheit-Abstand gilt: $0 < IA \leq {λ}_{I} ,$ wobei IA der Immersionseinheit-Abstand und λ_{I} eine Wellenlänge des in das optische System einfallenden Lichts ist. Die Erfindung ist nicht auf den vorgenannten Bereich des Immersionseinheit-Abstands eingeschränkt. Vielmehr kann jeder Bereich des Immersionseinheit-Abstands verwendet werden, welcher für die Erfindung geeignet ist.

Die Ausführungsform des erfindungsgemäßen optischen Systems, welche den Immersionseinheit-Abstand zwischen der Immersionseinheit und der Sensoreinheit vorsieht, ist insbesondere dann von Vorteil, wenn die Immersionseinheit und die Sensoreinheit nicht direkt aneinander angeordnet werden können. Aufgrund des Immersionseinheit-Abstands ist es möglich, dass das in das erfindungsgemäße optische System einfallende Licht aufgrund der sogenannten verhinderten Totalreflexion (im Englischen als "frustrated total internal reflection" oder "FTIR" bezeichnet) die Sensoreinheit erreicht und somit von der Sensoreinheit detektiert werden kann.

Bei einer Ausführungsform des erfindungsgemäßen optischen Systems ist es zusätzlich oder alternativ vorgesehen, dass zwischen der Immersionseinheit und der Sensoreinheit mindestens eine Absorptionseinheit angeordnet ist. Demnach ist diese Ausführungsform des erfindungsgemäßen optischen Systems beispielsweise dann vorgesehen, wenn die Immersionseinheit und die Sensoreinheit zueinander beabstandet angeordnet sind. Insbesondere ist es vorgesehen, dass die Absorptionseinheit derart ausgebildet ist, dass von der Immersionseinheit in die Absorptionseinheit eintretendes Licht eines bestimmten Wellenlängenbereichs in der Absorptionseinheit absorbiert wird. Zusätzlich oder alternativ hierzu ist es vorgesehen, dass die Absorptionseinheit derart ausgelegt ist, dass die Absorptionseinheit Licht eines weiteren bestimmten Wellenlängenbereichs, beispielsweise Infrarot-Strahlung, emittiert.

Wie oben bereits ausgeführt, ist es bei einer weiteren Ausführungsform des erfindungsgemäßen optischen Systems zusätzlich oder alternativ vorgesehen, dass die Absorptionseinheit und die Sensoreinheit beabstandet zueinander angeordnet sind. Insbesondere ist es vorgesehen, dass die Absorptionseinheit zu der Sensoreinheit einen Abstand aufweist, der nachfolgend als Absorptionseinheit-Abstand bezeichnet wird. Beispielsweise ist der Absorptionseinheit-Abstand die Länge einer geraden Strecke zwischen einem ersten Punkt auf einer zur Sensoreinheit gerichteten Oberfläche der Absorptionseinheit und einem zweiten Punkt auf einer zur Absorptionseinheit gerichteten Oberfläche der Sensoreinheit. Insbesondere ist der Absorptionseinheit-Abstand die kürzeste Länge aller möglichen geraden Strecken zwischen einem beliebigen ersten Punkt auf einer zur Sensoreinheit gerichteten Oberfläche der Absorptionseinheit und einem beliebigen zweiten Punkt auf einer zur Absorptionseinheit gerichteten Oberfläche der Sensoreinheit. Die vorgenannte Oberfläche der Sensoreinheit ist beispielsweise die Detektionsfläche der Sensoreinheit. Bei der Ausführungsform des erfindungsgemäßen optischen Systems ist es vorgesehen, dass für den Absorptionseinheit-Abstand gilt: $0 < AA \leq {λ}_{A} ,$ wobei AA der Absorptionseinheit-Abstand und λ_{A} eine Wellenlänge des in das optische System einfallenden Lichts ist. Die Erfindung ist nicht auf den vorgenannten Bereich des Absorptionseinheit-Abstands eingeschränkt. Vielmehr kann jeder Bereich des Absorptionseinheit-Abstands verwendet werden, welcher für die Erfindung geeignet ist.

Es wird darauf hingewiesen, dass die vorgenannte Wellenlänge λ_{I} des in das erfindungsgemäße optische System einfallenden Lichts und die vorgenannte Wellenlänge λ_{A} des in das erfindungsgemäße optische System einfallenden Lichts identisch sein können.

Die Immersionseinheit weist mindestens eine zweite Immersionseinrichtung in flüssiger Form auf. Bei einer wiederum weiteren Ausführungsform des erfindungsgemäßen optischen Systems ist es zusätzlich vorgesehen, dass die Immersionseinheit mindestens eine erste Immersionseinrichtung in fester Form aufweist. Die erste Immersionseinrichtung in fester Form weist beispielsweise Silizium, Germanium, Zinksulfid, Chalkogenide, AsSe und/oder GeAsSe auf. Die zweite Immersionseinrichtung in flüssiger Form weist beispielsweise Wasser, ein Öl und/oder Glycerin auf. Beispielsweise ist die Immersionseinheit vollständig als zweite Immersionseinrichtung ausgebildet. Mit anderen Worten ausgedrückt, ist die Immersionseinheit vollständig in flüssiger Form gegeben.

Bei einer Ausführungsform des erfindungsgemäßen optischen Systems ist es zusätzlich oder alternativ vorgesehen, dass die Immersionseinheit mindestens eine optische Einheit aufweist. Die optische Einheit weist mindestens eines der folgenden Merkmale auf: (i) die optische Einheit ist planparallel ausgebildet; (ii) eine Brechzahl der optischen Einheit ist größer als eine Brechzahl eines an der Immersionseinheit objektseitig angrenzenden Mediums; (iii) die optische Einheit ist zur Filterung von Licht ausgebildet; (iv) die optische Einheit ist zur Filterung von Infrarotlicht ausgebildet. Es wird explizit darauf hingewiesen, dass die Erfindung nicht auf die vorgenannten Ausführungsformen der optischen Einheit eingeschränkt ist. Vielmehr kann als optische Einheit jede optische Einheit verwendet werden, welche für die Erfindung geeignet ist. Beispielsweise kann die optische Einheit gekrümmt und/oder als Mikrolinse ausgebildet sein.

Die Erfindung betrifft auch eine Kamera zur Abbildung eines Objekts mit einem optischen System, das mindestens eines der weiter oben oder weiter unten genannten Merkmale oder eine Kombination von mindestens zwei der weiter oben oder weiter unten genannten Merkmale aufweist. Beispielsweise ist diese Kamera als Wärmebildkamera ausgebildet und/oder an einem tragbaren Telefon, an einem tragbaren Computer, an einem Fahrzeug, in einem Flugkörper (beispielsweise eine Drohne oder ein Satellit), an einem bemannten Flugzeug oder an einem unbemannten Flugzeug angeordnet. Insbesondere ist es vorgesehen, dass mit der erfindungsgemäßen Kamera Licht aus einem der folgenden Wellenlängenbereiche erfasst wird: dem Nahinfrarotbereich (0,7 µm bis 3 µm), dem mittleren Infrarotbereich (3 µm bis 50 µm) und dem Ferninfrarotbereich (50 µm bis 1000 µm).

Die Erfindung betrifft ferner ein weiteres erfindungsgemäßes optisches System, das nachfolgend erläutert wird. Das weitere erfindungsgemäße optische System ist für eine Kamera zur Abbildung eines Objekts vorgesehen. Beispielsweise ist/sind das weitere erfindungsgemäße optische System und/oder die Kamera, an welcher das weitere erfindungsgemäße optische System angeordnet ist, an einem tragbaren Telefon, an einem tragbaren Computer, an einem Fahrzeug, in einem Flugkörper (beispielsweise eine Drohne oder ein Satellit), an einem bemannten Flugzeug oder an einem unbemannten Flugzeug angeordnet. Es wird explizit darauf hingewiesen, dass das weitere erfindungsgemäße optische System nicht auf die vorgenannten Ausführungsformen eingeschränkt ist. Vielmehr kann das weitere erfindungsgemäße optische System an jeglichem optischen Gerät angeordnet sein, für welches das weitere erfindungsgemäße optische System geeignet ist. Beispielsweise kann das weitere erfindungsgemäße optische System in einem Fernglas, in einem Fernrohr, in einem Teleskop, in einem Spektiv oder in einem Lichtmikroskop angeordnet sein.

Das weitere erfindungsgemäße optische System weist mindestens eine Sensoreinheit auf. Beispielsweise ist die Sensoreinheit als ein gekühlter Sensor, als ein ungekühlter Sensor, als ein CCD-Sensor, als ein CMOS-Sensor, als ein InGaAs-Sensor, als ein InSb-Sensor, als ein MCT-Sensor (also ein Quecksilber-Cadmium-Tellurid-Sensor), als ein QWIP-Sensor (also ein Quantentopf-Infrarot-Photodetektor) und/oder als ein Mikrobolometer ausgebildet. Die Erfindung ist nicht auf die vorgenannten Ausführungsformen der Sensoreinheit eingeschränkt. Vielmehr kann als Sensoreinheit jede Sensoreinheit verwendet werden, welche für die Erfindung geeignet ist. Die Sensoreinheit kann auch als elektronische Sensoreinheit bezeichnet werden. Beispielsweise weist die Sensoreinheit eine Vielzahl von Pixeln auf. Jedes Pixel der Vielzahl von Pixeln dient der Detektion von auf das Pixel einfallendem Licht. Im Grunde genommen ist an jedem Pixel jeweils eine Detektionseinheit angeordnet. Die Detektionseinheit detektiert auf das Pixel einfallendes Licht und erzeugt in Abhängigkeit des einfallenden Lichts ein Detektionssignal, das beispielsweise an eine Prozessoreinheit geleitet wird. Die Prozessoreinheit wertet die an sie geleiteten Detektionssignale aus und zeigt die Auswertung beispielsweise in Form eines Bildes auf einer Anzeigeeinheit an. **Zusätzlich** oder alternativ hierzu ist es vorgesehen, das Detektionssignal und/oder das Bild in einer Speichereinheit zu speichern. Wiederum zusätzlich oder alternativ hierzu ist es vorgesehen, dass das Detektionssignal und/oder das Bild an eine weitere Einheit, beispielsweise an ein weiteres Computersystem, weitergeleitet wird.

Darüber hinaus weist das weitere erfindungsgemäße optische System mindestens eine Linseneinheit auf. Beispielsweise ist die Linseneinheit mit einer einzigen Linse versehen. Weitere Ausführungsformen des weiteren erfindungsgemäßen optischen Systems sehen vor, dass die Linseneinheit mehrere Linsen und/oder mehrere optische Elemente (beispielsweise in Form eines Prismas oder eines Spiegels) aufweist. Bei einer weiteren Ausführungsform des weiteren erfindungsgemäßen optischen Systems ist die Linseneinheit als eine Linsengruppe ausgebildet, die mehrere Linsen und/oder mehrere optische Elemente aufweist. Alternativ ist es bei einer noch weiteren Ausführungsform des weiteren erfindungsgemäßen optischen Systems vorgesehen, dass das weitere erfindungsgemäße optische System mindestens eine erste Linsengruppe und mindestens eine zweite Linsengruppe aufweist, wobei jede der Linsengruppen mehrere Linsen und/oder mehrere optische Elemente aufweist.

Das weitere erfindungsgemäße optische System ist mit mindestens einer Immersionseinheit versehen, die einen Brechungsindex n größer 1 aufweist. Beispielsweise gilt für den Brechungsindex n das Folgende: 1 < n ≤ 6 oder 1 < n ≤ 4. Die Immersionseinheit ist zwischen der Linseneinheit und der Sensoreinheit angeordnet. Ferner ist die Immersionseinheit sowohl an der Linseneinheit als auch an der Sensoreinheit angeordnet. Im Unterschied zum Stand der Technik ist die Immersionseinheit nicht an dem Objekt angeordnet, sondern an der Sensoreinheit, auf welche das Objekt mittels der Linseneinheit abgebildet wird. Beispielsweise ist die Immersionseinheit als Linseneinrichtung ausgebildet. Insbesondere ist es vorgesehen, dass die Linseneinrichtung eine erste Seite und eine zweite Seite aufweist. Die erste Seite der Linseneinrichtung ist zur Linseneinheit gerichtet und ist beispielsweise gekrümmt ausgebildet. Die zweite Seite der Linseneinrichtung ist zur Sensoreinheit gerichtet und ist beispielsweise plan ausgebildet. Bei einer weiteren Ausführungsform des weiteren erfindungsgemäßen optischen Systems ist es zusätzlich oder alternativ vorgesehen, dass die Linseneinrichtung mit einer einzigen Linse versehen ist. Weitere Ausführungsformen des weiteren erfindungsgemäßen optischen Systems sehen vor, dass die Linseneinrichtung mehrere Linsen und/oder mehrere optische Elemente (beispielsweise in Form eines Prismas oder eines Spiegels) aufweist. Bei einer weiteren Ausführungsform des weiteren erfindungsgemäßen optischen Systems ist die Linseneinrichtung als eine Linsengruppe ausgebildet, die mehrere Linsen und/oder mehrere optische Elemente aufweist.

Das weitere erfindungsgemäße optische System stellt sicher, dass aufgrund der Anordnung der Immersionseinheit an der Sensoreinheit eine größere numerische Apertur NA des erfindungsgemäßen optischen Systems erzielbar ist. Eine größere numerische Apertur NA des weiteren erfindungsgemäßen optischen Systems im Unterschied zum Stand der Technik führt zu einer kleineren F-Zahl des weiteren erfindungsgemäßen optischen Systems im Vergleich zum Stand der Technik. Demnach ist es möglich, im Vergleich zum Stand der Technik eine kleinere Auflösungsgrenze zu erzielen (siehe Gleichung [3]). Aufgrund der größeren numerischen Apertur des weiteren erfindungsgemäßen optischen Systems im Vergleich zum Stand der Technik ist demnach auch eine höhere Auflösung des weiteren erfindungsgemäßen optischen Systems im Vergleich zum Stand der Technik erzielbar (siehe Gleichung [5]).

Bei einer Ausführungsform des weiteren erfindungsgemäßen optischen Systems ist es zusätzlich oder alternativ vorgesehen, dass das weitere erfindungsgemäße optische System eine Lichteinfallsrichtung aufweist. Die Lichteinfallsrichtung ist die Richtung, in welche Licht vom Objekt gesehen in das weitere erfindungsgemäße optische System eintritt und in welcher das Licht das weitere erfindungsgemäße optische System durchläuft, bis es von der Sensoreinheit detektiert wird. Vom Objekt aus in die Lichteinfallsrichtung gesehen sind zunächst die Linseneinheit, dann die Immersionseinheit und dann die Sensoreinheit entlang einer optischen Achse des weiteren erfindungsgemäßen optischen Systems angeordnet.

Bei einer weiteren Ausführungsform des weiteren erfindungsgemäßen optischen Systems ist es zusätzlich oder alternativ vorgesehen, dass die Immersionseinheit die Sensoreinheit berührt. Mit anderen Worten ausgedrückt, ist die Immersionseinheit direkt an der Sensoreinheit angeordnet. Insbesondere ist es vorgesehen, dass eine zur Sensoreinheit gerichtete Fläche der Immersionseinheit eine zur Immersionseinheit gerichtete Detektionsfläche der Sensoreinheit berührt. Beispielsweise ist es vorgesehen, dass die Immersionseinheit die Sensoreinheit teilweise berührt. Mit anderen Worten ausgedrückt, ist es bei dieser Ausführungsform des weiteren erfindungsgemäßen optischen Systems vorgesehen, dass nur ein erster Teil der zur Sensoreinheit gerichteten Fläche der Immersionseinheit an der zur Immersionseinheit gerichteten Detektionsfläche der Sensoreinheit direkt angeordnet ist. Ein zweiter Teil der zur Sensoreinheit gerichteten Fläche der Immersionseinheit ist nicht direkt an der zur Immersionseinheit gerichteten Detektionsfläche der Sensoreinheit angeordnet. Der zweite Teil der zur Sensoreinheit gerichteten Fläche der Immersionseinheit ist demnach zur Sensoreinheit beabstandet angeordnet. Alternativ hierzu ist es vorgesehen, dass die Immersionseinheit die Sensoreinheit vollständig berührt. Mit anderen Worten ausgedrückt, ist es bei dieser Ausführungsform des weiteren erfindungsgemäßen optischen Systems vorgesehen, dass die zur Sensoreinheit gerichtete Fläche der Immersionseinheit vollständig an der zur Immersionseinheit gerichteten Detektionsfläche der Sensoreinheit angeordnet ist.

Bei einer noch weiteren Ausführungsform des weiteren erfindungsgemäßen optischen Systems ist es zusätzlich oder alternativ vorgesehen, dass die Immersionseinheit die Linseneinheit berührt. Mit anderen Worten ausgedrückt, ist die Immersionseinheit direkt an der Linseneinheit angeordnet. Insbesondere ist es vorgesehen, dass eine zur Linseneinheit gerichtete Fläche der Immersionseinheit eine zur Immersionseinheit gerichtete Fläche der Linseneinheit berührt. Beispielsweise ist es vorgesehen, dass die Immersionseinheit die Linseneinheit teilweise berührt. Mit anderen Worten ausgedrückt, ist es bei dieser Ausführungsform des weiteren erfindungsgemäßen optischen Systems vorgesehen, dass nur ein erster Teil der zur Linseneinheit gerichteten Fläche der Immersionseinheit an der zur Immersionseinheit gerichteten Fläche der Linseneinheit direkt angeordnet ist. Ein zweiter Teil der zur Linseneinheit gerichteten Fläche der Immersionseinheit ist nicht direkt an der zur Immersionseinheit gerichteten Fläche der Linseneinheit angeordnet. Der zweite Teil der zur Linseneinheit gerichteten Fläche der Immersionseinheit ist demnach zur Linseneinheit beabstandet angeordnet. Alternativ hierzu ist es vorgesehen, dass die Immersionseinheit die Linseneinheit vollständig berührt. Mit anderen Worten ausgedrückt, ist es bei dieser Ausführungsform des weiteren erfindungsgemäßen optischen Systems vorgesehen, dass die zur Linseneinheit gerichtete Fläche der Immersionseinheit vollständig an der zur Immersionseinheit gerichteten Fläche der Linseneinheit angeordnet ist.

Bei einer wiederum weiteren Ausführungsform des weiteren erfindungsgemäßen optischen Systems ist es zusätzlich oder alternativ vorgesehen, dass die Immersionseinheit und die Sensoreinheit beabstandet zueinander angeordnet sind. Insbesondere ist es vorgesehen, dass die Immersionseinheit zu der Sensoreinheit einen Abstand aufweist, der nachfolgend als Immersionseinheit-Abstand bezeichnet wird. Beispielsweise ist der Immersionseinheit-Abstand die Länge einer Geraden zwischen einem ersten Punkt auf einer zur Sensoreinheit gerichteten Oberfläche der Immersionseinheit und einem zweiten Punkt auf einer zur Immersionseinheit gerichteten Oberfläche der Sensoreinheit. Insbesondere ist der Immersionseinheit-Abstand die kürzeste Länge aller möglichen Geraden zwischen einem beliebigen ersten Punkt auf einer zur Sensoreinheit gerichteten Oberfläche der Immersionseinheit und einem beliebigen zweiten Punkt auf einer zur Immersionseinheit gerichteten Oberfläche der Sensoreinheit. Bei der Ausführungsform des weiteren erfindungsgemäßen optischen Systems ist es vorgesehen, dass für den Immersionseinheit-Abstand gilt: $0 < IA \leq 4 ⋅ {λ}_{I} ,$ wobei IA der Immersionseinheit-Abstand und λ_{I} eine Wellenlänge des in das optische System einfallenden Lichts ist. Die Erfindung ist nicht auf den vorgenannten Bereich des Immersionseinheit-Abstands eingeschränkt. Vielmehr kann jeder Bereich des Immersionseinheit-Abstands verwendet werden, welcher für die Erfindung geeignet ist.

Die Ausführungsform des weiteren erfindungsgemäßen optischen Systems, welche den Immersionseinheit-Abstand zwischen der Immersionseinheit und der Sensoreinheit vorsieht, ist insbesondere dann von Vorteil, wenn die Immersionseinheit und die Sensoreinheit nicht direkt aneinander angeordnet werden können. Aufgrund des Immersionseinheit-Abstands ist es möglich, dass das in das weitere erfindungsgemäße optische System einfallende Licht aufgrund der sogenannten verhinderten Totalreflexion (im Englischen als "frustrated total internal reflection" oder "FTIR" bezeichnet) die Sensoreinheit erreicht und somit von der Sensoreinheit detektiert werden kann.

Bei einer Ausführungsform des weiteren erfindungsgemäßen optischen Systems ist es zusätzlich oder alternativ vorgesehen, dass zwischen der Immersionseinheit und der Sensoreinheit mindestens eine Absorptionseinheit angeordnet ist. Demnach ist diese Ausführungsform des weiteren erfindungsgemäßen optischen Systems beispielsweise dann vorgesehen, wenn die Immersionseinheit und die Sensoreinheit zueinander beabstandet angeordnet sind. Insbesondere ist es vorgesehen, dass die Absorptionseinheit derart ausgebildet ist, dass von der Immersionseinheit in die Absorptionseinheit eintretendes Licht eines bestimmten Wellenlängenbereichs in der Absorptionseinheit absorbiert wird. Zusätzlich oder alternativ hierzu ist es vorgesehen, dass die Absorptionseinheit derart ausgelegt ist, dass die Absorptionseinheit Licht eines weiteren bestimmten Wellenlängenbereichs, beispielsweise Infrarot-Strahlung, emittiert.

Wie oben bereits ausgeführt, ist es bei einer weiteren Ausführungsform des weiteren erfindungsgemäßen optischen Systems zusätzlich oder alternativ vorgesehen, dass die Absorptionseinheit und die Sensoreinheit beabstandet zueinander angeordnet sind. Insbesondere ist es vorgesehen, dass die Absorptionseinheit zu der Sensoreinheit einen Abstand aufweist, der nachfolgend als Absorptionseinheit-Abstand bezeichnet wird. Beispielsweise ist der Absorptionseinheit-Abstand die Länge einer Geraden zwischen einem ersten Punkt auf einer zur Sensoreinheit gerichteten Oberfläche der Absorptionseinheit und einem zweiten Punkt auf einer zur Absorptionseinheit gerichteten Oberfläche der Sensoreinheit. Insbesondere ist der Absorptionseinheit-Abstand die kürzeste Länge aller möglichen Geraden zwischen einem beliebigen ersten Punkt auf einer zur Sensoreinheit gerichteten Oberfläche der Absorptionseinheit und einem beliebigen zweiten Punkt auf einer zur Absorptionseinheit gerichteten Oberfläche der Sensoreinheit. Die vorgenannte Oberfläche der Sensoreinheit ist beispielsweise die Detektionsfläche der Sensoreinheit. Bei der Ausführungsform des weiteren erfindungsgemäßen optischen Systems ist es vorgesehen, dass für den Absorptionseinheit-Abstand gilt: $0 < AA \leq 4 ⋅ {λ}_{A} ,$ wobei AA der Absorptionseinheit-Abstand und λ_{A} eine Wellenlänge des in das optische System einfallenden Lichts ist. Die Erfindung ist nicht auf den vorgenannten Bereich des Absorptionseinheit-Abstands eingeschränkt. Vielmehr kann jeder Bereich des Absorptionseinheit-Abstands verwendet werden, welcher für die Erfindung geeignet ist.

Es wird darauf hingewiesen, dass die vorgenannte Wellenlänge λ_{I} des in das weitere erfindungsgemäße optische System einfallenden Lichts und die vorgenannte Wellenlänge λ_{A} des in das weitere erfindungsgemäße optische System einfallenden Lichts identisch sein können.

Bei einer wiederum weiteren Ausführungsform des weiteren erfindungsgemäßen optischen Systems ist es zusätzlich oder alternativ vorgesehen, dass die Immersionseinheit mindestens eines der folgenden Merkmale aufweist: (i) mindestens eine erste Immersionseinrichtung in fester Form, und (ii) mindestens eine zweite Immersionseinrichtung in flüssiger Form. Die erste Immersionseinrichtung in fester Form weist beispielsweise Silizium, Germanium, Zinksulfid, Chalkogenide, AsSe und/oder GeAsSe auf. Beispielsweise ist die Immersionseinheit vollständig als erste Immersionseinrichtung ausgebildet. Mit anderen Worten ausgedrückt, ist die Immersionseinheit vollständig in fester Form gegeben. Die zweite Immersionseinrichtung in flüssiger Form weist beispielsweise Wasser, ein Öl und/oder Glycerin auf. Beispielsweise ist die Immersionseinheit vollständig als zweite Immersionseinrichtung ausgebildet. Mit anderen Worten ausgedrückt, ist die Immersionseinheit vollständig in flüssiger Form gegeben.

Die Erfindung betrifft auch eine weitere Kamera zur Abbildung eines Objekts mit einem weiteren erfindungsgemäßen optischen System, das mindestens eines der weiter oben oder weiter unten genannten Merkmale oder eine Kombination von mindestens zwei der weiter oben oder weiter unten genannten Merkmale aufweist. Beispielsweise ist diese Kamera als Wärmebildkamera ausgebildet und/oder an einem tragbaren Telefon, an einem tragbaren Computer, an einem Fahrzeug, in einem Flugkörper (beispielsweise eine Drohne oder ein Satellit), an einem bemannten Flugzeug oder an einem unbemannten Flugzeug angeordnet. Insbesondere ist es vorgesehen, dass mit der weiteren erfindungsgemäßen Kamera Licht aus einem der folgenden Wellenlängenbereiche erfasst wird: dem Nahinfrarotbereich (0,7 µm bis 3 µm), dem mittleren Infrarotbereich (3 µm bis 50 µm) und dem Ferninfrarotbereich (50 µm bis 1000 µm).

Weitere praktische Ausführungsformen und Vorteile der Erfindung sind nachfolgend im Zusammenhang mit den Zeichnungen beschrieben. Es zeigen:
- Figur 1: eine schematische Darstellung einer ersten Ausführungsform einer Kamera mit einem optischen System (nicht Teil der Erfindung, aber wichtig zum Verständnis der Erfindung);
- Figur 2: eine schematische Darstellung einer zweiten Ausführungsform einer Kamera mit einem optischen System (nicht Teil der Erfindung, aber wichtig zum Verständnis der Erfindung);
- Figur 3: eine schematische Darstellung einer dritten Ausführungsform einer Kamera mit einem optischen System (nicht Teil der Erfindung, aber wichtig zum Verständnis der Erfindung);
- Figur 4: eine schematische Darstellung einer vierten Ausführungsform einer Kamera mit einem optischen System gemäß der Erfindung;
- Figur 5: eine schematische Darstellung einer fünften Ausführungsform einer Kamera mit einem optischen System gemäß der Erfindung;
- Figur 6: eine schematische Darstellung einer sechsten Ausführungsform einer Kamera mit einem optischen System gemäß der Erfindung; sowie
- Figur 7: eine schematische Darstellung einer siebten Ausführungsform einer Kamera mit einem optischen System gemäß der Erfindung.

Ein optisches System 100 gemäß der Erfindung wird nun am Beispiel einer Kamera 200 näher erläutert. Beispielsweise ist die Kamera 200 als Wärmebildkamera ausgebildet und/oder an einem tragbaren Telefon, an einem tragbaren Computer, an einem Fahrzeug, in einem Flugkörper (beispielsweise eine Drohne oder ein Satellit), an einem bemannten Flugzeug oder an einem unbemannten Flugzeug angeordnet. Insbesondere ist es vorgesehen, dass mit der erfindungsgemäßen Kamera 200 Licht aus einem der folgenden Wellenlängenbereiche erfasst wird: dem Nahinfrarotbereich (0,7 µm bis 3 µm), dem mittleren Infrarotbereich (3 µm bis 50 µm) und dem Ferninfrarotbereich (50 µm bis 1000 µm). Es wird explizit darauf hingewiesen, dass das optische System 100 nicht auf die vorgenannten Ausführungsformen eingeschränkt ist. Vielmehr kann das optische System 100 an jeglichem optischen Gerät angeordnet sein, für welches das optische System 100 geeignet ist. Beispielsweise kann das optische System 100 in einem Fernglas, in einem Fernrohr, in einem Teleskop, in einem Spektiv oder in einem Lichtmikroskop angeordnet sein.

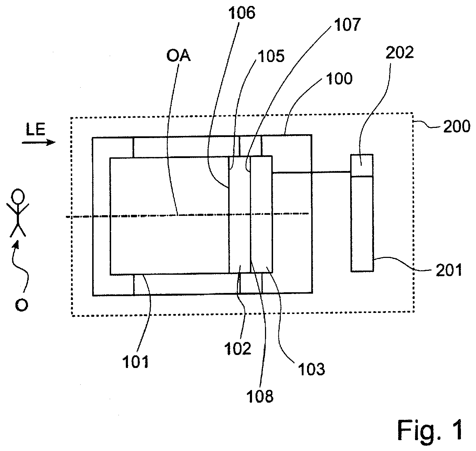

**Figur** 1 zeigt eine schematische Darstellung einer Ausführungsform der Kamera 200 zur Abbildung eines Objekts O. Die Kamera 200 weist das optische System 100 auf. Bei der in **Figur** 1 dargestellten Ausführungsform weist das optische System 100 eine Linseneinheit 101, eine Immersionseinheit 102 und eine Sensoreinheit 103 auf.

Die Linseneinheit 101 ist zur Abbildung des Objekts O auf die Sensoreinheit 103 ausgebildet. Beispielsweise ist die Linseneinheit 101 als Objektiv ausgebildet. Bei einer Ausführungsform der Linseneinheit 101 ist die Linseneinheit 101 mit einer einzigen Linse versehen. Weitere Ausführungsformen der Linseneinheit 101 sehen vor, dass die Linseneinheit 101 mehrere Linsen und/oder mehrere optische Elemente (beispielsweise in Form eines Prismas oder eines Spiegels) aufweist. Bei einer weiteren Ausführungsform ist die Linseneinheit 101 als eine Linsengruppe ausgebildet, die mehrere Linsen und/oder mehrere optische Elemente aufweist. Alternativ ist es bei einer noch weiteren Ausführungsform vorgesehen, dass die Linseneinheit 101 mindestens eine erste Linsengruppe und mindestens eine zweite Linsengruppe aufweist, wobei jede der Linsengruppen mehrere Linsen und/oder mehrere optische Elemente aufweist.

Die Sensoreinheit 103 detektiert Lichtstrahlen, welche von dem Objekt O aus in Lichteinfallsrichtung LE durch die Linseneinheit 101 fallen und erzeugt Detektionssignale. Die Lichteinfallsrichtung LE ist die Richtung, in welche Licht vom Objekt O aus gesehen in das optische System 100 eintritt und in welcher das Licht das optische System 100 durchläuft, bis es von der Sensoreinheit 103 detektiert wird.

Beispielsweise weist die Sensoreinheit 103 eine Sensorfläche mit einer Vielzahl von Pixeln auf. Jedes Pixel der Vielzahl von Pixeln dient der Detektion von auf das Pixel einfallendem Licht. Im Grunde genommen ist an jedem Pixel jeweils eine Detektionseinheit angeordnet. Die Detektionseinheit detektiert auf das Pixel einfallendes Licht und erzeugt in Abhängigkeit des einfallenden Lichts ein Detektionssignal, das beispielsweise an eine Prozessoreinheit 202 der Kamera 200 geleitet wird. Die Prozessoreinheit 202 wertet die an sie geleiteten Detektionssignale aus und zeigt die Auswertung beispielsweise in Form eines Bildes auf einer Anzeigeeinheit 201 der Kamera 200 an. Die Anzeigeeinheit 201 ist beispielsweise als ein Feldemissionsbildschirm, als ein Flüssigkristallbildschirm, als ein Dünnschichttransistorbildschirm, als ein Plasmabildschirm, als ein SED (Surface Conduction Electron Emitter Display) oder als ein Bildschirm, der organische Leuchtdioden aufweist, ausgebildet. Die vorgenannte Aufzählung ist nicht abschließend. Vielmehr kann als Anzeigeeinheit 201 jegliche Anzeigeeinheit verwendet werden, welche für die Erfindung geeignet ist. Zusätzlich oder alternativ hierzu ist es vorgesehen, die Detektionssignale und/oder das Bild in einer Speichereinheit zu speichern. Wiederum zusätzlich oder alternativ hierzu ist es vorgesehen, dass die Detektionssignale und/oder das Bild an eine weitere Einheit, beispielsweise an ein weiteres Computersystem, weitergeleitet werden/wird.

Beispielsweise ist die Sensoreinheit 103 als ein gekühlter Sensor, als ein ungekühlter Sensor, als ein CCD-Sensor, als ein CMOS-Sensor, als ein InGaAs-Sensor, als ein InSb-Sensor, als ein MCT-Sensor (also ein Quecksilber-Cadmium-Tellurid-Sensor), als ein QWIP-Sensor (also ein Quantentopf-Infrarot-Photodetektor) und/oder als ein Mikrobolometer ausgebildet. Die Erfindung ist nicht auf die vorgenannten Ausführungsformen der Sensoreinheit 103 eingeschränkt. Vielmehr kann als Sensoreinheit 103 jede Sensoreinheit verwendet werden, welche für die Erfindung geeignet ist.

Die Immersionseinheit 102 weist einen Brechungsindex n auf, für den gilt: n > 1. Beispielsweise gilt für den Brechungsindex n das Folgende: 1 < n ≤ 6 oder 1 < n ≤ 4. Beispielsweise ist die Immersionseinheit 102 als Linseneinrichtung ausgebildet. Auf die weiter oben gemachten Ausführungen hinsichtlich der Linseneinrichtung, die auch hier gelten, wird verwiesen. Die Immersionseinheit 102 ist zwischen der Linseneinheit 101 und der Sensoreinheit 103 angeordnet. Ferner ist die Immersionseinheit 102 sowohl an der Linseneinheit 101 als auch an der Sensoreinheit 103 angeordnet. Im Unterschied zum Stand der Technik ist die Immersionseinheit 102 nicht an dem Objekt O angeordnet, sondern an der Sensoreinheit 103, auf welche das Objekt O mittels der Linseneinheit 101 abgebildet wird. Bei der in Figur 1 dargestellten Ausführungsform sind vom Objekt O aus in die Lichteinfallsrichtung LE gesehen zunächst die Linseneinheit 101, dann die Immersionseinheit 102 und dann die Sensoreinheit 103 entlang einer optischen Achse OA des optischen Systems 100 angeordnet. Ferner berührt bei der in Figur 1 dargestellten Ausführungsform des optischen Systems 100 eine zur Linseneinheit 101 gerichtete erste Fläche 105 der Immersionseinheit 102 eine zur Immersionseinheit 102 gerichtete erste Fläche 106 der Linseneinheit 101. Eine zur Sensoreinheit 103 gerichtete zweite Fläche 107 der Immersionseinheit 102 berührt eine zur Immersionseinheit 102 gerichtete Detektionsfläche 108 der Sensoreinheit 103. Mit anderen Worten ausgedrückt, ist die zur Linseneinheit 101 gerichtete erste Fläche 105 der Immersionseinheit 102 direkt an der zur Immersionseinheit 102 gerichteten ersten Fläche 106 der Linseneinheit 101 angeordnet. Die zur Sensoreinheit 103 gerichtete zweite Fläche 107 der Immersionseinheit 102 ist direkt an der zur Immersionseinheit 102 gerichteten Detektionsfläche 108 der Sensoreinheit 103 angeordnet. Die Immersionseinheit 102 berührt die Linseneinheit 101 und die Sensoreinheit 103 vollständig. Mit anderen Worten ausgedrückt, ist es bei dieser Ausführungsform des optischen Systems 100 vorgesehen, dass die zur Linseneinheit 101 gerichtete erste Fläche 105 der Immersionseinheit 102 vollständig an der zur Immersionseinheit 102 gerichteten ersten Fläche 106 der Linseneinheit 101 angeordnet ist. Zusätzlich oder alternativ ist es vorgesehen, dass die zur Sensoreinheit 103 gerichtete zweite Fläche 107 der Immersionseinheit 102 vollständig an der zur Immersionseinheit 102 gerichteten Detektionsfläche 108 der Sensoreinheit 103 angeordnet ist.

Bei einer Ausführungsform des optischen Systems 100 ist es vorgesehen, dass die zur Linseneinheit 101 gerichtete erste Fläche 105 der Immersionseinheit 102 die zur Immersionseinheit 102 gerichtete erste Fläche 106 der Linseneinheit 101 teilweise berührt. Mit anderen Worten ausgedrückt, ist es bei dieser Ausführungsform des optischen Systems 100 beispielsweise vorgesehen, dass nur ein erster Teil der zur Linseneinheit 101 gerichteten ersten Fläche 105 der Immersionseinheit 102 an der zur Immersionseinheit 102 gerichteten ersten Fläche 106 der Linseneinheit 101 direkt angeordnet ist. Ein zweiter Teil der zur Linseneinheit 101 gerichteten ersten Fläche 105 der Immersionseinheit 102 ist nicht direkt an der zur Immersionseinheit 102 gerichteten ersten Fläche 106 der Linseneinheit 101 angeordnet. Der zweite Teil der zur Linseneinheit 101 gerichteten ersten Fläche 105 der Immersionseinheit 102 ist demnach zu der zur Immersionseinheit 102 gerichteten ersten Fläche 106 der Linseneinheit 101 beabstandet angeordnet.

Bei einer weiteren Ausführungsform des optischen Systems 100 ist es vorgesehen, dass die zur Sensoreinheit 103 gerichtete zweite Fläche 107 der Immersionseinheit 102 die zur Immersionseinheit 102 gerichtete Detektionsfläche 108 der Sensoreinheit 103 teilweise berührt. Mit anderen Worten ausgedrückt, ist es bei dieser Ausführungsform des optischen Systems 100 beispielsweise vorgesehen, dass nur ein erster Teil der zur Sensoreinheit 103 gerichteten zweiten Fläche 107 der Immersionseinheit 102 direkt an der zur Immersionseinheit 102 gerichteten Detektionsfläche 108 der Sensoreinheit 103 angeordnet ist. Ein zweiter Teil der zur Sensoreinheit 103 gerichteten zweiten Fläche 107 der Immersionseinheit 102 ist nicht direkt an der zur Immersionseinheit 102 gerichteten Detektionsfläche 108 der Sensoreinheit 103 angeordnet. Der zweite Teil der zur Sensoreinheit 103 gerichteten zweiten Fläche 107 der Immersionseinheit 102 ist an der zur Immersionseinheit 102 gerichteten Detektionsfläche 108 der Sensoreinheit 103 beabstandet angeordnet.

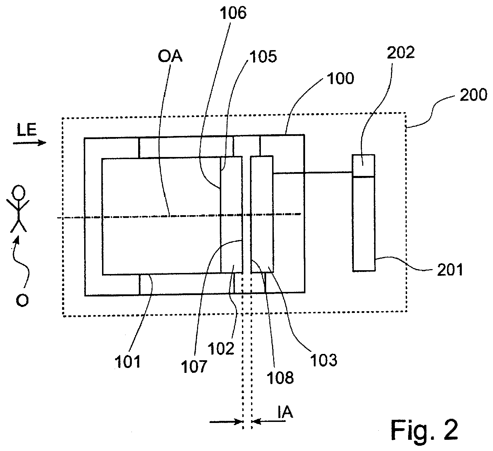

**Figur 2** zeigt eine schematische Darstellung einer weiteren Ausführungsform der Kamera 200 zur Abbildung eines Objekts O. Die Ausführungsform der **Figur 2** beruht auf der Ausführungsform der **Figur 1****.** Es wird daher auf die oben gemachten Ausführungen verwiesen, die auch hier gelten. Gleiche Bauteile sind mit gleichen Bezugszeichen versehen. Im Unterschied zur Ausführungsform der **Figur 1** ist bei der Ausführungsform der **Figur 2** vorgesehen, dass die Immersionseinheit 102 und die Sensoreinheit 103 beabstandet zueinander angeordnet sind. Mit anderen Worten ausgedrückt, ist die zur Sensoreinheit 103 gerichtete zweite Fläche 107 der Immersionseinheit 102 zu der zur Immersionseinheit 102 gerichteten Detektionsfläche 108 der Sensoreinheit 103 beabstandet angeordnet. Die Immersionseinheit 102 weist zu der Sensoreinheit 103 einen Abstand auf, der als Immersionseinheit-Abstand IA bezeichnet wird. Beispielsweise ist der Immersionseinheit-Abstand IA die Länge einer Geraden zwischen einem ersten Punkt auf der zur Sensoreinheit 103 gerichteten zweiten Fläche 107 der Immersionseinheit 102 und einem zweiten Punkt auf der zur Immersionseinheit 102 gerichteten Detektionsfläche 108 der Sensoreinheit 103. Bei der in **Figur 2** dargestellten Ausführungsform des optischen Systems 100 ist es vorgesehen, dass für den Immersionseinheit-Abstand IA gilt: $0 < IA \leq 4 ⋅ {λ}_{I} ,$ wobei IA der Immersionseinheit-Abstand und λ_{I} eine Wellenlänge des in das optische System 100 einfallenden Lichts ist. Die Erfindung ist nicht auf den vorgenannten Bereich des Immersionseinheit-Abstands IA eingeschränkt. Vielmehr kann jeder Bereich des Immersionseinheit-Abstands IA verwendet werden, welcher für die Erfindung geeignet ist. Die in **Figur 2** dargestellte Ausführungsform des optischen Systems 100 ist insbesondere dann von Vorteil, wenn die Immersionseinheit 102 und die Sensoreinheit 103 nicht direkt aneinander angeordnet werden können. Aufgrund des Immersionseinheit-Abstands IA ist es möglich, dass das in das optische System 100 einfallende Licht aufgrund der sogenannten verhinderten Totalreflexion (im Englischen als "frustrated total internal reflection" oder "FTIR" bezeichnet) die Sensoreinheit 103 erreicht und somit von der Sensoreinheit 103 detektiert werden kann.

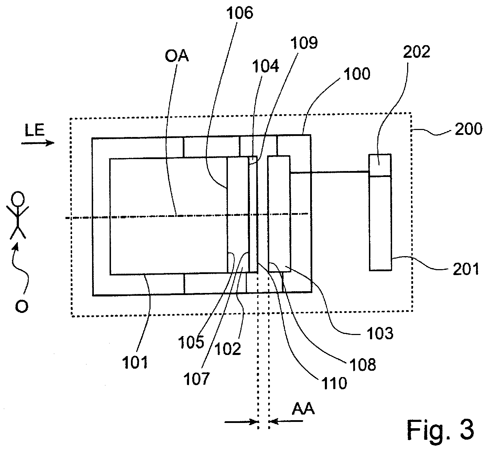

**Figur 3** zeigt eine schematische Darstellung einer weiteren Ausführungsform der Kamera 200 zur Abbildung eines Objekts O. Die Ausführungsform der **Figur 3** beruht auf der Ausführungsform der **Figur 1****.** Es wird daher auf die oben gemachten Ausführungen verwiesen, die auch hier gelten. Gleiche Bauteile sind mit gleichen Bezugszeichen versehen. Im Unterschied zur Ausführungsform der **Figur 1** ist bei der Ausführungsform der **Figur 3** vorgesehen, dass zwischen der Immersionseinheit 102 und der Sensoreinheit 103 mindestens eine Absorptionseinheit 104 angeordnet ist. Bei der in **Figur 3** dargestellten Ausführungsform sind vom Objekt O aus in die Lichteinfallsrichtung LE gesehen zunächst die Linseneinheit 101, dann die Immersionseinheit 102, dann die Absorptionseinheit 104 und dann die Sensoreinheit 103 entlang einer optischen Achse OA des optischen Systems 100 angeordnet.

Ferner berührt bei der in **Figur 3** dargestellten Ausführungsform des optischen Systems 100 eine zur Immersionseinheit 102 gerichtete erste Fläche 109 der Absorptionseinheit 104 die zur Absorptionseinheit 104 gerichtete zweite Fläche 107 der Immersionseinheit 102. Mit anderen Worten ausgedrückt, ist die zur Immersionseinheit 102 gerichtete erste Fläche 109 der Absorptionseinheit 104 direkt an der zur Absorptionseinheit 104 gerichteten zweiten Fläche 107 der Immersionseinheit 102 angeordnet. Die Absorptionseinheit 104 berührt die Immersionseinheit 102 vollständig. Mit anderen Worten ausgedrückt, ist es bei dieser Ausführungsform des optischen Systems 100 vorgesehen, dass die zur Immersionseinheit 102 gerichtete erste Fläche 109 der Absorptionseinheit 104 vollständig an der zur Absorptionseinheit 104 gerichteten zweiten Fläche 107 der Immersionseinheit 102 angeordnet ist.

Bei einer Ausführungsform des optischen Systems 100 ist es vorgesehen, dass die zur Immersionseinheit 102 gerichtete erste Fläche 109 der Absorptionseinheit 104 die zur Absorptionseinheit 104 gerichtete zweite Fläche 107 der Immersionseinheit 102 teilweise berührt. Mit anderen Worten ausgedrückt, ist es bei dieser Ausführungsform des optischen Systems 100 beispielsweise vorgesehen, dass nur ein erster Teil der zur Immersionseinheit 102 gerichteten ersten Fläche 109 der Absorptionseinheit 104 an der zur Absorptionseinheit 104 gerichteten zweiten Fläche 107 der Immersionseinheit 102 direkt angeordnet ist. Ein zweiter Teil der zur Immersionseinheit 102 gerichteten ersten Fläche 109 der Absorptionseinheit 104 ist nicht direkt an der zur Absorptionseinheit 104 gerichteten zweiten Fläche 107 der Immersionseinheit 102 angeordnet. Der zweite Teil der zur Immersionseinheit 102 gerichteten ersten Fläche 109 der Absorptionseinheit 104 ist demnach zu der zur Absorptionseinheit 104 gerichteten zweiten Fläche 107 der Immersionseinheit 102 beabstandet angeordnet.

Bei der Ausführungsform der **Figur 3** ist es vorgesehen, dass die Absorptionseinheit 104 und die Sensoreinheit 103 beabstandet zueinander angeordnet sind. Mit anderen Worten ausgedrückt, ist die zur Sensoreinheit 103 gerichtete zweite Fläche 110 der Absorptionseinheit 104 zu der zur Absorptionseinheit 104 gerichteten Detektionsfläche 108 der Sensoreinheit 103 beabstandet angeordnet. Die Absorptionseinheit 104 weist zu der Sensoreinheit 103 einen Abstand auf, der nachfolgend als Absorptionseinheit-Abstand AA bezeichnet wird. Beispielsweise ist der Absorptionseinheit-Abstand AA die Länge einer Geraden zwischen einem ersten Punkt auf der zur Sensoreinheit 103 gerichteten zweiten Fläche 110 der Absorptionseinheit 104 und einem zweiten Punkt auf der zur Absorptionseinheit 104 gerichteten Detektionsfläche 108 der Sensoreinheit 103. Bei der in **Figur 3** dargestellten Ausführungsform des optischen Systems 100 ist es vorgesehen, dass für den Absorptionseinheit-Abstand AA gilt: $0 < AA \leq 4 ⋅ {λ}_{A} ,$ wobei AA der Absorptionseinheit-Abstand und λ_{A} eine Wellenlänge des in das optische System 100 einfallenden Lichts ist. Die Erfindung ist nicht auf den vorgenannten Bereich des Absorptionseinheit-Abstands AA eingeschränkt. Vielmehr kann jeder Bereich des Absorptionseinheit-Abstands AA verwendet werden, welcher für die Erfindung geeignet ist. Es wird darauf hingewiesen, dass die vorgenannte Wellenlänge λ_{I} des in das optische System 100 einfallenden Lichts und die vorgenannte Wellenlänge λ_{A} des in das optische System 100 einfallenden Lichts identisch sein können.

Die Absorptionseinheit 104 ist beispielsweise derart ausgebildet, dass von der Immersionseinheit 102 in die Absorptionseinheit 104 eintretendes Licht eines bestimmten Wellenlängenbereichs in der Absorptionseinheit 104 absorbiert wird. Zusätzlich oder alternativ hierzu ist es vorgesehen, dass die Absorptionseinheit 104 derart ausgelegt ist, dass die Absorptionseinheit 104 Licht eines weiteren bestimmten Wellenlängenbereichs, beispielsweise Infrarot-Strahlung emittiert.

Das optische System 100 sowie die Kamera 200 stellen sicher, dass im Unterschied zum Stand der Technik aufgrund der Immersionseinheit 102 eine größere numerische Apertur NA des optischen Systems 100 erzielbar ist. Eine größere numerische Apertur NA des optischen Systems 100 im Unterschied zum Stand der Technik führt zu einer kleineren F-Zahl des optischen Systems 100 im Vergleich zum Stand der Technik. Demnach ist es möglich, im Vergleich zum Stand der Technik eine kleinere Auflösungsgrenze zu erzielen (siehe Gleichung [3]). Aufgrund der größeren numerischen Apertur NA des optischen Systems 100 im Vergleich zum Stand der Technik ist demnach auch eine höhere Auflösung des optischen Systems 100 im Vergleich zum Stand der Technik erzielbar (siehe Gleichung [5]).

Bei einer Ausführungsform des optischen Systems 100 weist die Immersionseinheit 102 mindestens eines der folgenden Merkmale auf: (i) mindestens eine erste Immersionseinrichtung in fester Form, und (ii) mindestens eine zweite Immersionseinrichtung in flüssiger Form. Die erste Immersionseinrichtung in fester Form weist beispielsweise Silizium, Germanium, Zinksulfid, Chalkogenide, AsSe und/oder GeAsSe auf. Beispielsweise ist die Immersionseinheit 102 vollständig als erste Immersionseinrichtung ausgebildet. Mit anderen Worten ausgedrückt, ist die Immersionseinheit 102 vollständig in fester Form gegeben. Die zweite Immersionseinrichtung in flüssiger Form weist beispielsweise Wasser, ein Öl und/oder Glycerin auf. Beispielsweise ist die Immersionseinheit 102 vollständig als zweite Immersionseinrichtung ausgebildet. Mit anderen Worten ausgedrückt, ist die Immersionseinheit 102 vollständig in flüssiger Form gegeben.

Wie oben bereits erwähnt, entspricht die numerische Apertur NA der Größe $n ⋅ sin θ$ wobei
- n: der Brechungsindex an einer Ebene des durch das optische System 100 erzeugten Bildes des Objekts O ist, wobei die Ebene die Detektionsfläche der Sensoreinheit 103 des optischen Systems 100 ist, und
- θ: der halbe Einfallswinkel von Randstrahlen des auf die Sensoreinheit 103 einfallenden Lichtbündels ist.

Bei einem typischen halben Einfallswinkel von 30° und unter der Annahme, dass die Immersionseinheit 102 eine erste Immersionseinrichtung in fester Form, nämlich in Form von Germanium mit einem Brechungsindex von n = 4 aufweist, ergibt sich eine numerische Apertur von NA = 2. Überlegungen haben ergeben, dass bei einer derartigen numerischen Apertur NA sich die Auflösung einer Sensoreinheit 103 mit 640 x 480 Pixeln derart vergrößern lässt, dass sie einer Auflösung einer Sensoreinheit mit 1920 x 1080 Pixeln entspricht, wobei die Detektionsfläche der Sensoreinheit 103, an welcher die Pixel angeordnet sind, ungefähr gleich groß ist wie die Detektionsfläche einer handelsüblichen Sensoreinheit mit 1920 x 1080 Pixeln. Ferner haben Überlegungen ergeben, dass sich bei einer derartigen numerischen Apertur NA die Auflösung einer Sensoreinheit 103 mit 1280 x 1024 Pixeln derart vergrößern lässt, dass sie einer Auflösung einer Sensoreinheit mit 3840 x 2160 Pixel entspricht, wobei die Detektionsfläche der Sensoreinheit 103, an welcher die Pixel angeordnet sind, kleiner als eine handelsübliche Sensoreinheit mit 3840 x 2160 Pixel ausgebildet ist.

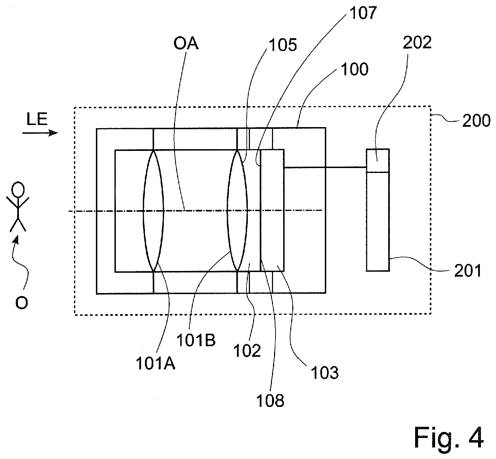

**Figur 4** zeigt eine schematische Darstellung einer weiteren Ausführungsform der Kamera 200 zur Abbildung eines Objekts O. Die Ausführungsform der **Figur 4** beruht auf der Ausführungsform der **Figur 1****.** Es wird daher auf die oben gemachten Ausführungen verwiesen, die auch hier gelten. Gleiche Bauteile sind mit gleichen Bezugszeichen versehen. Nachfolgend wird auf die Unterschiede der Ausführungsform der **Figur 4** im Vergleich zur Ausführungsform der **Figur 1** eingegangen.

Im Unterschied zur Ausführungsform der **Figur 1** ist bei der Ausführungsform der **Figur 4** vorgesehen, dass das optische System 100 eine erste Linseneinheit 101A und eine zweite Linseneinheit 101B aufweist.

Die erste Linseneinheit 101A ist zusammen mit der zweiten Linseneinheit 101B und der Immersionseinheit 102 zur Abbildung des Objekts O auf die Sensoreinheit 103 ausgebildet. Bei einer Ausführungsform der ersten Linseneinheit 101A ist die erste Linseneinheit 101A mit einer einzigen Linse versehen. Weitere Ausführungsformen der ersten Linseneinheit 101A sehen vor, dass die erste Linseneinheit 101A mehrere Linsen und/oder mehrere optische Elemente (beispielsweise in Form eines Prismas oder eines Spiegels) aufweist. Bei einer weiteren Ausführungsform ist die erste Linseneinheit 101A als eine Linsengruppe ausgebildet, die mehrere Linsen und/oder mehrere optische Elemente aufweist. Alternativ ist es bei einer noch weiteren Ausführungsform vorgesehen, dass die erste Linseneinheit 101A mindestens eine erste Linsengruppe und mindestens eine zweite Linsengruppe aufweist, wobei jede der Linsengruppen mehrere Linsen und/oder mehrere optische Elemente aufweist.

Bei einer Ausführungsform der zweiten Linseneinheit 101B ist die zweite Linseneinheit 101B mit einer einzigen Linse versehen. Weitere Ausführungsformen der zweiten Linseneinheit 101B sehen vor, dass die zweite Linseneinheit 101B mehrere Linsen und/oder mehrere optische Elemente (beispielsweise in Form eines Prismas oder eines Spiegels) aufweist. Bei einer weiteren Ausführungsform ist die zweite Linseneinheit 101B als eine Linsengruppe ausgebildet, die mehrere Linsen und/oder mehrere optische Elemente aufweist. Alternativ ist es bei einer noch weiteren Ausführungsform vorgesehen, dass die zweite Linseneinheit 101B mindestens eine erste Linsengruppe und mindestens eine zweite Linsengruppe aufweist, wobei jede der Linsengruppen mehrere Linsen und/oder mehrere optische Elemente aufweist.

In Lichteinfallsrichtung LE gesehen sind zunächst die erste Linseneinheit 101A, dann die zweite Linseneinheit 101B, dann die Immersionseinheit 102 und dann die Sensoreinheit 103 entlang der optischen Achse OA angeordnet. Ferner weisen die zweite Linseneinheit 101B und die Immersionseinheit 102 zusammen positive Brechkraft auf. Insofern verhalten sich die zweite Linseneinheit 101B und die Immersionseinheit 102 wie eine Sammellinse.

Die Immersionseinheit 102 weist beispielsweise einen Brechungsindex (also eine Brechzahl) n größer 1 auf. Insbesondere gilt für den Brechungsindex n das Folgende: 1 < n ≤ 6 oder 1 < n ≤ 4. Beispielsweise ist der Brechungsindex der Immersionseinheit 102 größer als ein Brechungsindex eines an der Immersionseinheit 102 objektseitig angrenzenden Mediums. Beispielsweise ist das Medium Luft oder die zweite Linseneinheit 101B. Bei einer weiteren Ausführungsform ist der Brechungsindex der Immersionseinheit 102 sehr ähnlich zu oder identisch mit dem Brechungsindex eines an der Immersionseinheit 102 objektseitig angrenzenden Mediums. Beispielsweise unterscheiden sich der Brechungsindex der Immersionseinheit 102 und der Brechungsindex des an der Immersionseinheit 102 objektseitig angrenzenden Mediums um ± 0,01 oder ± 0,02.

Die Immersionseinheit 102 ist zwischen der zweiten Linseneinheit 101B und der Sensoreinheit 103 angeordnet. Ferner ist die Immersionseinheit 102 sowohl an der zweiten Linseneinheit 101B als auch an der Sensoreinheit 103 angeordnet. Im Unterschied zum Stand der Technik ist die Immersionseinheit 102 nicht an dem Objekt O angeordnet, sondern an der Sensoreinheit 103, auf welche das Objekt O mittels der ersten Linseneinheit 101A und der zweiten Linseneinheit 101B abgebildet wird. Bei der in **Figur 4** dargestellten Ausführungsform des optischen Systems 100 berührt eine zur zweiten Linseneinheit 101B gerichtete erste Fläche 105 der Immersionseinheit 102 eine zur Immersionseinheit 102 gerichtete erste Fläche der zweiten Linseneinheit 101B. Alternativ hierzu kann die zur zweiten Linseneinheit 101B gerichtete erste Fläche 105 der Immersionseinheit 102 zu der zur Immersionseinheit 102 gerichtete erste Fläche der zweiten Linseneinheit 101B beabstandet angeordnet sein. Eine zur Sensoreinheit 103 gerichtete zweite Fläche 107 der Immersionseinheit 102 berührt eine zur Immersionseinheit 102 gerichtete Detektionsfläche 108 der Sensoreinheit 103. Mit anderen Worten ausgedrückt, ist die zur Sensoreinheit 103 gerichtete zweite Fläche 107 der Immersionseinheit 102 direkt an der zur Immersionseinheit 102 gerichteten Detektionsfläche 108 der Sensoreinheit 103 angeordnet. Die Immersionseinheit 102 kann die zweite Linseneinheit 101B und die Sensoreinheit 103 vollständig berühren. Mit anderen Worten ausgedrückt, ist es bei dieser Ausführungsform des optischen Systems 100 vorgesehen, dass die zur zweiten Linseneinheit 101B gerichtete erste Fläche 105 der Immersionseinheit 102 vollständig an der zur Immersionseinheit 102 gerichteten ersten Fläche der zweiten Linseneinheit 101B angeordnet ist. Zusätzlich oder alternativ ist es vorgesehen, dass die zur Sensoreinheit 103 gerichtete zweite Fläche 107 der Immersionseinheit 102 vollständig an der zur Immersionseinheit 102 gerichteten Detektionsfläche 108 der Sensoreinheit 103 angeordnet ist.

Bei einer Ausführungsform des optischen Systems 100 gemäß der **Figur 4** ist es vorgesehen, dass die zur zweiten Linseneinheit 101B gerichtete erste Fläche 105 der Immersionseinheit 102 die zur Immersionseinheit 102 gerichtete erste Fläche der zweiten Linseneinheit 101B teilweise berührt. Mit anderen Worten ausgedrückt, ist es bei dieser Ausführungsform des optischen Systems 100 gemäß der **Figur 4** beispielsweise vorgesehen, dass nur ein erster Teil der zur zweiten Linseneinheit 101B gerichteten ersten Fläche 105 der Immersionseinheit 102 an der zur Immersionseinheit 102 gerichteten ersten Fläche der zweiten Linseneinheit 101B direkt angeordnet ist. Ein zweiter Teil der zur zweiten Linseneinheit 101B gerichteten ersten Fläche 105 der Immersionseinheit 102 ist nicht direkt an der zur Immersionseinheit 102 gerichteten ersten Fläche der zweiten Linseneinheit 101B angeordnet. Der zweite Teil der zur zweiten Linseneinheit 101B gerichteten ersten Fläche 105 der Immersionseinheit 102 ist demnach zu der zur Immersionseinheit 102 gerichteten ersten Fläche der zweiten Linseneinheit 101B beabstandet angeordnet.

Bei einer weiteren Ausführungsform des optischen Systems 100 gemäß der **Figur 4** ist es vorgesehen, dass die zur Sensoreinheit 103 gerichtete zweite Fläche 107 der Immersionseinheit 102 die zur Immersionseinheit 102 gerichtete Detektionsfläche 108 der Sensoreinheit 103 teilweise berührt. Mit anderen Worten ausgedrückt, ist es bei dieser Ausführungsform des optischen Systems 100 gemäß der **Figur 4** beispielsweise vorgesehen, dass nur ein erster Teil der zur Sensoreinheit 103 gerichteten zweiten Fläche 107 der Immersionseinheit 102 direkt an der zur Immersionseinheit 102 gerichteten Detektionsfläche 108 der Sensoreinheit 103 angeordnet ist. Ein zweiter Teil der zur Sensoreinheit 103 gerichteten zweiten Fläche 107 der Immersionseinheit 102 ist nicht direkt an der zur Immersionseinheit 102 gerichteten Detektionsfläche 108 der Sensoreinheit 103 angeordnet. Der zweite Teil der zur Sensoreinheit 103 gerichteten zweiten Fläche 107 der Immersionseinheit 102 ist an der zur Immersionseinheit 102 gerichteten Detektionsfläche 108 der Sensoreinheit 103 beabstandet angeordnet.

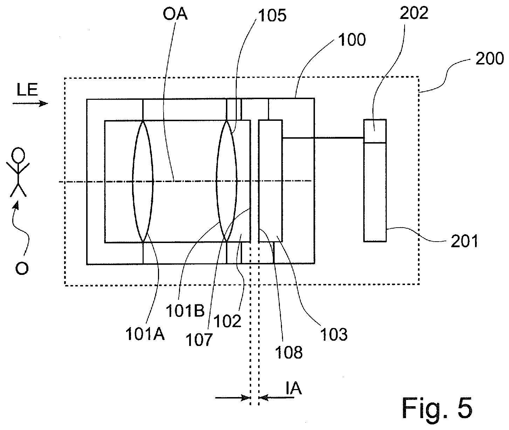

**Figur 5** zeigt eine schematische Darstellung einer weiteren Ausführungsform der Kamera 200 zur Abbildung eines Objekts O. Die Ausführungsform der **Figur 5** beruht auf der Ausführungsform der **Figur 4****.** Es wird daher auf die oben gemachten Ausführungen verwiesen, die auch hier gelten. Gleiche Bauteile sind mit gleichen Bezugszeichen versehen. Im Unterschied zur Ausführungsform der **Figur 4** ist bei der Ausführungsform der **Figur 5** vorgesehen, dass die Immersionseinheit 102 und die Sensoreinheit 103 beabstandet zueinander angeordnet sind. Mit anderen Worten ausgedrückt, ist die zur Sensoreinheit 103 gerichtete zweite Fläche 107 der Immersionseinheit 102 zu der zur Immersionseinheit 102 gerichteten Detektionsfläche 108 der Sensoreinheit 103 beabstandet angeordnet. Die Immersionseinheit 102 weist zu der Sensoreinheit 103 einen Abstand auf, der als Immersionseinheit-Abstand IA bezeichnet wird. Beispielsweise ist der Immersionseinheit-Abstand IA die Länge einer geraden Strecke zwischen einem ersten Punkt auf der zur Sensoreinheit 103 gerichteten zweiten Fläche 107 der Immersionseinheit 102 und einem zweiten Punkt auf der zur Immersionseinheit 102 gerichteten Detektionsfläche 108 der Sensoreinheit 103. Bei der in Figur 5 dargestellten Ausführungsform des optischen Systems 100 ist es vorgesehen, dass für den Immersionseinheit-Abstand IA gilt: $0 < IA \leq {λ}_{I} ,$ wobei IA der Immersionseinheit-Abstand und λ_{I} eine Wellenlänge des in das optische System 100 einfallenden Lichts ist. Die Erfindung ist nicht auf den vorgenannten Bereich des Immersionseinheit-Abstands IA eingeschränkt. Vielmehr kann jeder Bereich des Immersionseinheit-Abstands IA verwendet werden, welcher für die Erfindung geeignet ist. Die in **Figur 5** dargestellte Ausführungsform des optischen Systems 100 ist insbesondere dann von Vorteil, wenn die Immersionseinheit 102 und die Sensoreinheit 103 nicht direkt aneinander angeordnet werden können. Aufgrund des Immersionseinheit-Abstands IA ist es möglich, dass das in das optische System 100 einfallende Licht aufgrund der sogenannten verhinderten Totalreflexion (im Englischen als "frustrated total internal reflection" oder "FTIR" bezeichnet) die Sensoreinheit 103 erreicht und somit von der Sensoreinheit 103 detektiert werden kann.

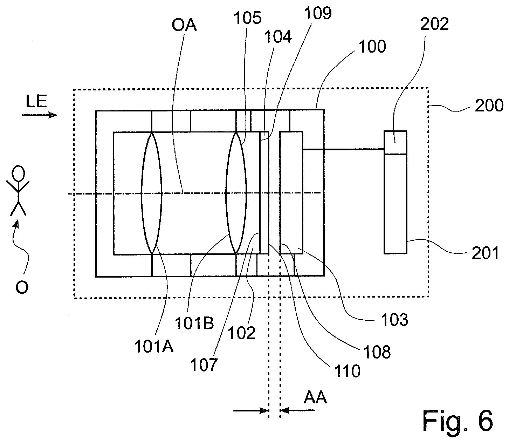

**Figur 6** zeigt eine schematische Darstellung einer weiteren Ausführungsform der Kamera 200 zur Abbildung eines Objekts O. Die Ausführungsform der **Figur 6** beruht auf der Ausführungsform der **Figur 4****.** Es wird daher auf die oben gemachten Ausführungen verwiesen, die auch hier gelten. Gleiche Bauteile sind mit gleichen Bezugszeichen versehen. Im Unterschied zur Ausführungsform der **Figur 4** ist bei der Ausführungsform der **Figur 6** vorgesehen, dass zwischen der Immersionseinheit 102 und der Sensoreinheit 103 mindestens eine Absorptionseinheit 104 angeordnet ist. Bei der in **Figur 6** dargestellten Ausführungsform sind vom Objekt O aus in die Lichteinfallsrichtung LE gesehen zunächst die erste Linseneinheit 101A, dann die zweite Linseneinheit 101B, dann die Immersionseinheit 102, dann die Absorptionseinheit 104 und dann die Sensoreinheit 103 entlang einer optischen Achse OA des optischen Systems 100 angeordnet.

Ferner berührt bei der in **Figur 6** dargestellten Ausführungsform des optischen Systems 100 eine zur Immersionseinheit 102 gerichtete erste Fläche 109 der Absorptionseinheit 104 die zur Absorptionseinheit 104 gerichtete zweite Fläche 107 der Immersionseinheit 102. Mit anderen Worten ausgedrückt, ist die zur Immersionseinheit 102 gerichtete erste Fläche 109 der Absorptionseinheit 104 direkt an der zur Absorptionseinheit 104 gerichteten zweiten Fläche 107 der Immersionseinheit 102 angeordnet. Die Absorptionseinheit 104 berührt die Immersionseinheit 102 vollständig. Mit anderen Worten ausgedrückt, ist es bei dieser Ausführungsform des optischen Systems 100 vorgesehen, dass die zur Immersionseinheit 102 gerichtete erste Fläche 109 der Absorptionseinheit 104 vollständig an der zur Absorptionseinheit 104 gerichteten zweiten Fläche 107 der Immersionseinheit 102 angeordnet ist.

Bei einer Ausführungsform des optischen Systems 100 gemäß der **Figur 6** ist es vorgesehen, dass die zur Immersionseinheit 102 gerichtete erste Fläche 109 der Absorptionseinheit 104 die zur Absorptionseinheit 104 gerichtete zweite Fläche 107 der Immersionseinheit 102 teilweise berührt. Mit anderen Worten ausgedrückt, ist es bei dieser Ausführungsform des optischen Systems 100 gemäß der **Figur 6** beispielsweise vorgesehen, dass nur ein erster Teil der zur Immersionseinheit 102 gerichteten ersten Fläche 109 der Absorptionseinheit 104 an der zur Absorptionseinheit 104 gerichteten zweiten Fläche 107 der Immersionseinheit 102 direkt angeordnet ist. Ein zweiter Teil der zur Immersionseinheit 102 gerichteten ersten Fläche 109 der Absorptionseinheit 104 ist nicht direkt an der zur Absorptionseinheit 104 gerichteten zweiten Fläche 107 der Immersionseinheit 102 angeordnet. Der zweite Teil der zur Immersionseinheit 102 gerichteten ersten Fläche 109 der Absorptionseinheit 104 ist demnach zu der zur Absorptionseinheit 104 gerichteten zweiten Fläche 107 der Immersionseinheit 102 beabstandet angeordnet.

Bei der Ausführungsform der **Figur 6** ist es vorgesehen, dass die Absorptionseinheit 104 und die Sensoreinheit 103 beabstandet zueinander angeordnet sind. Mit anderen Worten ausgedrückt, ist die zur Sensoreinheit 103 gerichtete zweite Fläche 110 der Absorptionseinheit 104 zu der zur Absorptionseinheit 104 gerichteten Detektionsfläche 108 der Sensoreinheit 103 beabstandet angeordnet. Die Absorptionseinheit 104 weist zu der Sensoreinheit 103 einen Abstand auf, der nachfolgend als Absorptionseinheit-Abstand AA bezeichnet wird. Beispielsweise ist der Absorptionseinheit-Abstand AA die Länge einer geraden Strecke zwischen einem ersten Punkt auf der zur Sensoreinheit 103 gerichteten zweiten Fläche 110 der Absorptionseinheit 104 und einem zweiten Punkt auf der zur Absorptionseinheit 104 gerichteten Detektionsfläche 108 der Sensoreinheit 103. Bei der in **Figur 6** dargestellten Ausführungsform des optischen Systems 100 ist es vorgesehen, dass für den Absorptionseinheit-Abstand AA gilt: $0 < AA \leq {λ}_{A} ,$ wobei AA der Absorptionseinheit-Abstand und λ_{A} eine Wellenlänge des in das optische System 100 einfallenden Lichts ist. Die Erfindung ist nicht auf den vorgenannten Bereich des Absorptionseinheit-Abstands AA eingeschränkt. Vielmehr kann jeder Bereich des Absorptionseinheit-Abstands AA verwendet werden, welcher für die Erfindung geeignet ist. Es wird darauf hingewiesen, dass die vorgenannte Wellenlänge λ_{I} des in das weitere optische System 100 einfallenden Lichts und die vorgenannte Wellenlänge λ_{A} des in das optische System 100 einfallenden Lichts identisch sein können.

Die Absorptionseinheit 104 ist beispielsweise derart ausgebildet, dass von der Immersionseinheit 102 in die Absorptionseinheit 104 eintretendes Licht eines bestimmten Wellenlängenbereichs in der Absorptionseinheit 104 absorbiert wird. Zusätzlich oder alternativ hierzu ist es vorgesehen, dass die Absorptionseinheit 104 derart ausgelegt ist, dass die Absorptionseinheit 104 Licht eines weiteren bestimmten Wellenlängenbereichs, beispielsweise Infrarot-Strahlung emittiert.

Bei dem optischen System 100 weist die Immersionseinheit 102 mindestens eine zweite Immersionseinrichtung in flüssiger Form auf. Zusätzlich weist die Immersionseinheit 102 beispielsweise mindestens eine erste Immersionseinrichtung in fester Form auf. Die erste Immersionseinrichtung in fester Form weist beispielsweise Silizium, Germanium, Zinksulfid, Chalkogenide, AsSe und/oder GeAsSe auf. Die zweite Immersionseinrichtung in flüssiger Form weist beispielsweise Wasser, ein Öl und/oder Glycerin auf. Beispielsweise ist die Immersionseinheit 102 vollständig als zweite Immersionseinrichtung ausgebildet. Mit anderen Worten ausgedrückt, ist die Immersionseinheit 102 vollständig in flüssiger Form gegeben.

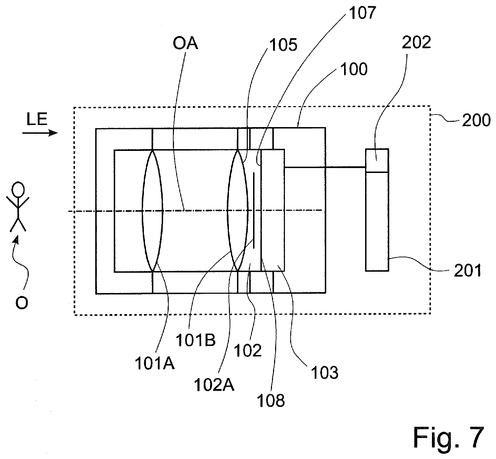

**Figur 7** zeigt eine schematische Darstellung einer weiteren Ausführungsform der Kamera 200 zur Abbildung eines Objekts O. Die Ausführungsform der **Figur 7** beruht auf der Ausführungsform der **Figur 4****.** Es wird daher auf die oben gemachten Ausführungen verwiesen, die auch hier gelten. Gleiche Bauteile sind mit gleichen Bezugszeichen versehen. Im Unterschied zur Ausführungsform der **Figur 4** ist bei der Ausführungsform der **Figur 7** vorgesehen, dass die Immersionseinheit 102 mindestens eine optische Einheit 102A aufweist. Die optische Einheit 102A weist mindestens eines der folgenden Merkmale auf: (i) die optische Einheit 102A ist planparallel ausgebildet; (ii) eine Brechzahl der optischen Einheit 102A ist größer als eine Brechzahl eines an der Immersionseinheit 102 objektseitig angrenzenden Mediums; (iii) die optische Einheit 102A ist zur Filterung von Licht ausgebildet; (iv) die optische Einheit 102A ist zur Filterung von Infrarotlicht ausgebildet. Es wird explizit darauf hingewiesen, dass die Erfindung nicht auf die vorgenannten Ausführungsformen der optischen Einheit 102A eingeschränkt ist. Vielmehr kann als optische Einheit 102A jede optische Einheit verwendet werden, welche für die Erfindung geeignet ist. Beispielsweise kann die optische Einheit 102A gekrümmt und/oder als Mikrolinse ausgebildet sein. Das vorgenannte Medium ist beispielsweise Luft oder die zweite Linseneinheit 101B.

Auch die Kamera 200 und das optische System 100 gemäß den **Figuren 4 bis 7** stellen sicher, dass aufgrund der Anordnung der Immersionseinheit 102 an der Sensoreinheit 103 eine größere numerische Apertur NA des erfindungsgemäßen optischen Systems erzielbar ist. Eine größere numerische Apertur NA dieses optischen Systems 100 im Unterschied zum Stand der Technik führt zu einer kleineren F-Zahl des erfindungsgemäßen optischen Systems 100 im Vergleich zum Stand der Technik. Demnach ist es möglich, im Vergleich zum Stand der Technik eine kleinere Auflösungsgrenze zu erzielen (siehe Gleichung [3]). Aufgrund der größeren numerischen Apertur dieses optischen Systems 100 im Vergleich zum Stand der Technik ist demnach auch eine höhere Auflösung dieses optischen Systems 100 im Vergleich zum Stand der Technik erzielbar (siehe Gleichung [5]). Ferner stellt dieses optische System 100 sicher, dass die numerische Apertur im Bereich der Sensoreinheit 103 größer ist als die numerische Apertur im objektseitigen Bereich der Immersionseinheit 102.

Die Erfindung bewirkt eine hohe Auflösung des erfindungsgemäßen optischen Systems bei gleichzeitiger kleinerer Größe des Sensors im Vergleich zum Stand der Technik. Dies führt zum einen zu geringeren Kosten hinsichtlich des Sensors (da die Kosten eines Sensors in der Regel mit der Größe des Sensors steigen) und zum anderen können Geräte, die das erfindungsgemäße optische System aufweisen, kleiner als der Stand der Technik ausgebildet sein.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

### Bezugszeichenliste

- 100: optisches System
- 101: Linseneinheit
- 101A: erste Linseneinheit
- 101B: zweite Linseneinheit
- 102: Immersionseinheit
- 102A: optische Einheit der Immersionseinheit
- 103: Sensoreinheit
- 104: Absorptionseinheit
- 105: erste Fläche der Immersionseinheit
- 106: erste Fläche der Linseneinheit
- 107: zweite Fläche der Immersionseinheit
- 108: Detektionsfläche der Sensoreinheit
- 109: erste Fläche der Absorptionseinheit
- 110: zweite Fläche der Absorptionseinheit

- 200: Kamera
- 201: Anzeigeeinheit
- 202: Prozessoreinheit

- IA: Immersionseinheit-Abstand
- AA: Absorptionseinheit-Abstand
- LE: Lichteinfallsrichtung
- O: Objekt
- OA: optische Achse

## Patentansprüche

1. Optisches System (100) für eine Kamera (200) zur Abbildung eines Objekts (O), mit
- mindestens einer Sensoreinheit (103),
- mindestens einer ersten Linseneinheit (101A) und mindestens einer zweiten Linseneinheit (101B), und mit
- mindestens einer Immersionseinheit (102), die einen Brechungsindex aufweist,
wobei
- das optische System (100) eine Lichteinfallsrichtung (LE) aufweist,
- in die Lichteinfallsrichtung (LE) gesehen, zunächst die erste Linseneinheit (101A), dann die zweite Linseneinheit (101B), dann die Immersionseinheit (102) und dann die Sensoreinheit (103) entlang einer optischen Achse (OA) des optischen Systems (100) angeordnet sind,
- die Immersionseinheit (102) zwischen der zweiten Linseneinheit (101B) und der Sensoreinheit (103) angeordnet ist,
- die Immersionseinheit (102) direkt an der zweiten Linseneinheit (101B) angeordnet ist,
- die Immersionseinheit (102) mindestens eine Immersionseinrichtung in flüssiger Form aufweist und direkt an der Sensoreinheit (103) angeordnet ist und wobei
- die zweite Linseneinheit (101B) und die Immersionseinheit (102) zusammen positive Brechkraft aufweisen.

2. Optisches System (100) nach Anspruch 1, **dadurch gekennzeichnet, dass** die Immersionseinheit (102) die Sensoreinheit (103) berührt.

3. Optisches System (100) nach Anspruch 1 oder 2, **dadurch gekennzeichnet, dass** das optische System (100) das folgende Merkmal aufweist:
die Immersionseinheit (102) weist zu der Sensoreinheit (103) einen Immersionseinheit-Abstand (IA) auf, wobei für den Immersionseinheit-Abstand (IA) gilt: $0 < IA \leq {λ}_{I} ,$ wobei IA der Immersionseinheit-Abstand und λ_{I} eine Wellenlänge des in das optische System (100) einfallenden Lichts ist.

4. Optisches System (100) nach einem der vorangehenden Ansprüche, **dadurch gekennzeichnet, dass** zwischen der Immersionseinheit (102) und der Sensoreinheit (103) mindestens eine Absorptionseinheit (104) angeordnet ist.

5. Optisches System (100) nach Anspruch 4, **dadurch gekennzeichnet, dass** das optische System (100) mindestens eines der folgenden Merkmale aufweist:
(i) die Absorptionseinheit (104) ist zur Filterung von Infrarotlicht ausgebildet;
(ii) die Absorptionseinheit (104) ist zur Erzeugung von Infrarotlicht ausgebildet;
(iii) die Absorptionseinheit (104) und die Sensoreinheit (103) sind beabstandet zueinander angeordnet;
(iv) die Absorptionseinheit (104) weist zu der Sensoreinheit (103) einen Absorptionseinheit-Abstand (AA) auf, wobei für den Absorptionseinheit-Abstand (AA) gilt: $0 < AA \leq {λ}_{A} ,$ wobei AA der Absorptionseinheit-Abstand und λ_{A} eine Wellenlänge des in das optische System (100) einfallenden Lichts ist.

6. Optisches System (100) nach einem der vorangehenden Ansprüche, **dadurch gekennzeichnet, dass** die Immersionseinrichtung in flüssiger Form eine zweite Immersionseinrichtung ist, und dass die Immersionseinheit (102) mindestens eine erste Immersionseinrichtung in fester Form aufweist.

7. Optisches System (100) nach einem der vorangehenden Ansprüche, **dadurch gekennzeichnet, dass** die Immersionseinheit (102) mindestens eine optische Einheit (102A) aufweist, wobei die optische Einheit (102A) mindestens eines der folgenden Merkmale aufweist:
(i) Die optische Einheit (102A) ist planparallel ausgebildet;
(ii) eine Brechzahl der optischen Einheit (102A) ist größer als eine Brechzahl eines an der Immersionseinheit (102) objektseitig angrenzenden Mediums;
(iii) die optische Einheit (102A) ist zur Filterung von Licht ausgebildet;
(iv) die optische Einheit (102A) ist zur Filterung von Infrarotlicht ausgebildet.

8. Optisches System (100) nach einem der vorangehenden Ansprüche, **dadurch gekennzeichnet, dass** das optische System (100) eines der folgenden Merkmale aufweist:
(i) der Brechungsindex der Immersionseinheit (102) ist größer als ein Brechungsindex eines an der Immersionseinheit (102) objektseitig angrenzenden Mediums;
(ii) der Brechungsindex ist abweichend zu oder identisch mit dem Brechungsindex eines an der Immersionseinheit (102) objektseitig angrenzenden Mediums, wobei die Abweichung ± 0,01 oder ± 0,02 beträgt.

9. Kamera (200) zur Abbildung eines Objekts (O) mit einem optischen System (100) nach einem der vorangehenden Ansprüche.

10. Kamera (200) nach Anspruch 9, **dadurch gekennzeichnet, dass** die Kamera (200) als Wärmebildkamera ausgebildet ist.

## Claims

1. Optical system (100) for a camera (200) for imaging an object (O), comprising
- at least one sensor unit (103),
- at least one first lens unit (101A) and at least one second lens unit (101B), and comprising
- at least one immersion unit (102) having a refractive index,
wherein
- the optical system (100) has a light incidence direction (LE),
- when viewed in the light incidence direction (LE), first the first lens unit (101A), then the second lens unit (101B), then the immersion unit (102) and then the sensor unit (103) are arranged along an optical axis (OA) of the optical system (100),
- the immersion unit (102) is arranged between the second lens unit (101B) and the sensor unit (103),
- the immersion unit (102) is arranged directly on the second lens unit (101B),
- the immersion unit (102) has at least one immersion device in liquid form and is arranged directly on the sensor unit (103), and wherein
- the second lens unit (101B) and the immersion unit (102) together have positive refractive power.

2. Optical system (100) according to Claim 1, **characterized in that** the immersion unit (102) touches the sensor unit (103).

3. Optical system (100) according to Claim 1 or 2, **characterized in that** the optical system (100) has the following feature:
the immersion unit (102) is at an immersion unit distance (IA) from the sensor unit (103), wherein the following applies to the immersion unit distance (IA): $0 < IA \leq {λ}_{I} ,$ where IA is the immersion unit distance and λ_{I} is a wavelength of the light incident into the optical system (100).

4. Optical system (100) according to any one of the preceding claims, **characterized in that** at least one absorption unit (104) is arranged between the immersion unit (102) and the sensor unit (103).

5. Optical system (100) according to Claim 4, **characterized in that** the optical system (100) has at least one of the following features:
(i) the absorption unit (104) is designed for filtering infrared light;
(ii) the absorption unit (104) is designed for generating infrared light;
(iii) the absorption unit (104) and the sensor unit (103) are arranged at a distance from one another;
(iv) the absorption unit (104) is at an absorption unit distance (AA) from the sensor unit (103), wherein the following applies to the absorption unit distance (AA): $0 < AA \leq {λ}_{A} ,$ where AA is the absorption unit distance and λ_{A} is a wavelength of the light incident into the optical system (100).

6. Optical system (100) according to any one of the preceding claims, **characterized in that** the immersion device in liquid form is a second immersion device, and **in that** the immersion unit (102) has at least one first immersion device in solid form.

7. Optical system (100) according to any one of the preceding claims, **characterized in that** the immersion unit (102) has at least one optical unit (102A), wherein the optical unit (102A) has at least one of the following features:
(i) the optical unit (102A) is plane-parallel;
(ii) a refractive index of the optical unit (102A) is greater than a refractive index of a medium adjacent to the immersion unit (102) on the object side;
(iii) the optical unit (102A) is designed for filtering light;
(iv) the optical unit (102A) is designed for filtering infrared light.

8. Optical system (100) according to any one of the preceding claims, **characterized in that** the optical system (100) has one of the following features:
(i) the refractive index of the immersion unit (102) is greater than a refractive index of a medium adjacent to the immersion unit (102) on the object side;
(ii) the refractive index is different from or identical to the refractive index of a medium adjacent to the immersion unit (102) on the object side, with the deviation being ± 0.01 or ± 0.02.

9. Camera (200) for imaging an object (O) having an optical system (100) according to any one of the preceding claims.

10. Camera (200) according to Claim 9, **characterized in that** the camera (200) is designed as a thermal imaging camera.

## Revendications

1. Système optique (100) pour une caméra (200) pour représenter un objet (O), avec
- au moins une unité de détection (103),
- au moins une première unité de lentille (101A) et au moins une deuxième unité de lentille (101B), et avec
- au moins une unité d'immersion (102), qui présente un indice de réfraction,
- le système optique (100) présentant une direction d'incidence de lumière (LE),
- vues dans la direction d'incidence de lumière (LE), la première unité de lentille (101A), puis la deuxième unité de lentille (101B), puis l'unité d'immersion (102) et ensuite l'unité de détection (103) étant disposées le long d'un axe optique (OA) du système optique (100),
- l'unité d'immersion (102) étant disposée entre la deuxième unité de lentille (101B) et l'unité de détection (103),
- l'unité d'immersion (102) étant disposée directement sur la deuxième unité de lentille (101B),
- l'unité d'immersion (102) comportant au moins un dispositif d'immersion sous forme liquide et étant disposée directement sur l'unité de détection (103) et
- la deuxième unité de lentille (101B) et l'unité d'immersion (102) présentant ensemble une force de réfraction positive.

2. Système optique (100) selon la revendication 1, **caractérisé en ce que** l'unité d'immersion (102) touche l'unité de détection (103).

3. Système optique (100) selon la revendication 1 ou 2, **caractérisé en ce que** le système optique (100) présente la caractéristique suivante :
l'unité d'immersion (102) présente une distance d'unité d'immersion (IA) par rapport à l'unité de détection (103), s'appliquant pour la distance d'unité d'immersion (IA) : $0 < IA \leq {λ}_{I} ,$ IA étant la distance de l'unité d'immersion et λ_{I} étant une longueur d'onde de la lumière incidente dans le système optique (100).

4. Système optique (100) selon l'une des revendications précédentes, **caractérisé en ce qu'**au moins une unité d'absorption (104) est disposée entre l'unité d'immersion (102) et l'unité de détection (103).

5. Système optique (100) selon la revendication 4, **caractérisé en ce que** le système optique (100) présente au moins une des caractéristiques suivantes :
(i) l'unité d'absorption (104) est formée pour filtrer de la lumière infrarouge ;
(ii) l'unité d'absorption (104) est formée pour produire de la lumière infrarouge ;
(iii) l'unité d'absorption (104) et l'unité de détection (103) sont espacées l'une par rapport à l'autre ;
(iv) l'unité d'absorption (104) présente une distance (AA) de l'unité d'absorption par rapport à l'unité de détection (103), s'appliquant pour la distance (AA) de l'unité d'absorption : $0 < AA \leq {λ}_{A} ,$ AA étant la distance d'unité d'absorption et λ_{A} étant une longueur d'onde de la lumière incidente dans le système optique (100).

6. Système optique (100) selon l'une des revendications précédentes, **caractérisé en ce que** le dispositif d'immersion sous forme liquide est un deuxième dispositif d'immersion, et que l'unité d'immersion (102) comporte au moins un premier dispositif d'immersion sous forme solide.

7. Système optique (100) selon l'une des revendications précédentes, **caractérisé en ce que** l'unité d'immersion (102) comporte au moins une unité optique (102A), l'unité optique (102A) présentant au moins une des caractéristiques suivantes :
(i) l'unité optique (102A) est formée parallèlement au plan ;
(ii) un indice de réfraction de l'unité optique (102A) est supérieur à un indice de réfraction d'un milieu adjacent à l'unité d'immersion (102) côté objet ;
(iii) l'unité optique (102A) est formée pour filtrer de la lumière ;
(iv) l'unité optique (102A) est formée pour filtrer de la lumière infrarouge.

8. Système optique (100) selon l'une des revendications précédentes, **caractérisé en ce que** le système optique (100) présente une des caractéristiques suivantes :
(i) l'indice de réfraction de l'unité d'immersion (102) est supérieur à un indice de réfraction d'un milieu adjacent à l'unité d'immersion (102) côté objet ;
(ii) l'indice de réfraction est différent de ou identique à l'indice de réfraction d'un milieu adjacent à l'unité d'immersion (102) côté objet, l'écart étant de ± 0,01 ou ± 0,02.

9. Caméra (200) pour représenter un objet (O) avec un système optique (100) selon l'une des revendications précédentes.

10. Caméra (200) selon la revendication 9, **caractérisée en ce que** la caméra (200) est formée comme une caméra d'imagerie thermique.
